Europäisches Patentamt

European Patent Office

Office européen des brevets

(19)

(11) EP 1 018 298 B1

(12) **EUROPEAN PATENT SPECIFICATION**

(45) Date of publication and mention
of the grant of the patent:
**17.07.2002   Bulletin 2002/29**

(21) Application number: **98919504.5**

(22) Date of filing: **07.05.1998**

(51) Int Cl.$^7$: **A01K 61/00**

(86) International application number:
**PCT/JP98/02022**

(87) International publication number:
**WO 98/49893 (12.11.1998 Gazette 1998/45)**

(54) **STONE MATERIAL FOR SUBMERGING INTO WATER, METHOD OF PRODUCTION THEREOF, AND METHOD OF FORMING SUBMARINE FOREST**

STEINMATERIAL ZUM UNTERWASSEREINSATZ, VERFAHREN ZU DESSEN HERSTELLUNG UND VERFAHREN ZUR HERSTELLUNG EINES UNTERWASSERWALDES

MATERIAU EN PIERRE DESTINE A ETRE IMMERGE DANS L'EAU, SON PROCEDE DE PRODUCTION ET PROCEDE DE FORMATION D'UNE FORET SOUS-MARINE

(84) Designated Contracting States:
**DE FR GB IT NL**

(30) Priority: **08.05.1997   JP   13442597**
             **30.06.1997   JP   18929397**
             **30.06.1997   JP   18929497**
             **29.09.1997   JP   28133797**

(43) Date of publication of application:
**12.07.2000   Bulletin 2000/28**

(73) Proprietor: **NKK CORPORATION**
**Tokyo 100-0005 (JP)**

(72) Inventors:
  • **TAKAHASHI, Tatsuhito, NKK Corporation**
  **Tokyo 100-0005 (JP)**
  • **KATO, Makoto, NKK Corporation**
  **Tokyo 100-0005 (JP)**
  • **NAKASHIMA, Hirohisa, NKK Corporation**
  **Tokyo 100-0005 (JP)**
  • **FUKUHARA, Minoru,**
  **Okayama University of Science**
  **Okayama-shi, Okayama 700-0005 (JP)**

(74) Representative: **HOFFMANN - EITLE**
**Patent- und Rechtsanwälte**
**Arabellastrasse 4**
**81925 München (DE)**

(56) References cited:
  JP-A- 2 211 816        JP-A- 54 054 892
  US-A- 4 181 450        US-A- 5 199 377
  US-A- 5 564 369        US-A- 5 569 314

  • DATABASE WPI [Online] DERWENT
  PUBLICATIONS LTD., LONDON, GB
  JP61146745, 4 July 1986 (1986-07-04) NIPPON
  STEEL CORP: XP002132048

EP 1 018 298 B1

## Description

Field of Technology

The present invention relates to underwater immersion blocks for a seaweed bed, a fishing bank, a river bed, and the like, a method of producing the same, and a method of creating a seaweed bed. The term "seaweed bed" means a plant community of marine algae (algae, seaweed, and the like) which grow at the sea bed.

Background of Technology

According to US 5,569,314, a thermally stable steelmaking slag is produced which is suitable for use in applications requiring dimensional stability, e.g. as aggregate in road construction. Fine particles of slag obtained from a basic oxygen furnace operation or from an arc furnace operation is firstly subjected to a thermal hydration at a temperature in the range of about 100° to 400°C. Thereafter, the hydrated slag particles are carbonated in the presence of carbon dioxide at a temperature in the range of about 500° to 900°C, whereby substantially all free calcium oxide in the slag particles is converted to calcium carbonate. The product obtained is said to be well suited for road construction and cementitious applications.

As a conventional method for effectively utilizing slag produced in an iron and steel making process, an attempt has been made to utilize the slag as a block for a seaweed bed, or a submarine immersion material for a fishing bank.

Possible main forms for utilizing slag as these materials include a method of utilizing an agglomerated slag as a block for a seaweed bed or the like, and a method of utilizing slag as an aggregate for a concrete fishing bank or the like. However, these methods have the following problems.

The former method has the probability that Ca contained in slag is eluted in the sea, increasing the pH of sea water in the periphery. The agglomerated slag obtained in the iron and steel making process is suitable as a block for a seaweed bed or the like from the viewpoint of surface properties, compared with concrete products. However, the agglomerated slag used as a block for a seaweed bed or the like has the same degree of function (adhesion and viability of marine algae) as natural stones, and it is not a block having the special function to promote growth of marine algae.

Since the slag produced in the iron and steel making process contains a large amount of metallic iron (granular iron), the slag is generally ground to a size so that the iron contained in the slag is recovered and recycled to the iron and steel making process. However, the slag used as a block for a seaweed bed or the like is required to have some level of size, and thus the slag ground for recovering the metal can hardly be used.

Therefore, when an agglomerated slag is used as a block for a seaweed bed or the like, recovery of the metal useful as iron and steel resources is impossible.

On the other hand, when such agglomerated slag containing a large amount of metal is immersed in sea water and used as a block for a seaweed bed, iron in the slag is oxidized to cause oligoaerobic sea water in the periphery according to the applied sea area, and cause the excessive supply of iron to sea water due to elution of iron. In order to avoid these problems, it is necessary to remove the metal sufficiently from slag. However, since slag components are mixed with the metal in a state where they are entwined with each other, the slag must be more finely ground than the case of recovery of the metal in order to remove the metal sufficiently. Such finely ground slag cannot be used as a submarine immersion material for a seaweed bed or the like.

While in the latter method, slag is used as an aggregate for a pre-cast product of concrete, thereby less causing the problems of the case in which an agglomerated slag is immersed in sea water. However, since the material obtained by this method is a concrete product having a cement-mortar surface, it is impossible to make use of the properties (for example, the properties of the irregular surface, etc.) of the agglomerated slag, from which a function for a seaweed or the like can be expected in its own way.

In recent years, the tendency to maintain and improve the natural environments of rivers including the life environments of living organisms such as fishes, crustacea, etc. has been increased, and as a part of this movement, attempts have been also made to improve river beds to environments where underwater living organisms (fishes, crustacea, aquatic insects, etc.) and aquatic plants (algae, water grasses, etc.) easily live and grow. Most of biological life and rest spaces referred to as so-called "life spaces" (biotope) in rivers are formed by piling blocks at riverbeds, and it can thus be said that a riverbed having more irregularities due to blocks, and the like has an environment where underwater living organisms more easily live. For example, relatively large spaces between massive stones immersed or semi-immersed in rivers, and small spaces between pebbles spread over a riverbed create important biotopes for underwater living organisms. Stones at a riverbed also cause growth spaces for aquatic plants such as algae and the like, and are important for growing aquatic plants.

Therefore, in order to improve riverbeds and the like as a part of an effective way for maintaining and improving the natural environments of rivers, immersion or laying of stones in an appropriate form on a riverbed (for example, a block set of a massive stone, immersion or laying of middle or small stones on a riverbed, etc.) can cause effective way for arranging an environment where underwater living organisms such as fishes and the like, and aquatic plants easily live and grow. However, such improvement of a riverbed or the like requires a huge amount of stones, and procurement of natural stones used for improvement from another place has the probability of causing new natural disruption. Since natural stones are not inexpensive, the construction cost is also increased.

Recently, as a part of way for effectively using slag produced in the iron and steel making process, attempts have been made to use slag as submarine immersion materials for fishing banks. Therefore, the slag produced in the iron and steel making process is possibly used as a river immersion block.

Possible main forms for utilizing slag as a river immersion material include a method in which massive slag is used as an immersion block , and a method in which slag is used as an aggregate for a concrete pre-cast product.

However, these methods have the following problems:

The former method has the probability that Ca contained in slag is eluted to water to increase the pH of water of a river. Since slag produced in the iron and steel making process contains a large amount of metal (granule iron), immersion of massive slag in water causes oxidation of granule iron, thereby causing oligoaerobic river water in the periphery according to water areas. In order to avoid this problem, it is necessary to remove the metal in slug sufficiently. However, since slag components are generally mixed with the granule iron in a state where there are entwined with each other, slag must be finely ground in order to remove the metal, and the thus-finely ground slag cannot be used as a river immersion block.

While in the use of slag as an aggregate for a concrete pre-cast product, as in the latter method, since the base comprises a concrete product, it is impossible to make use of the properties (for example, the properties of the irregular surface, etc.) of slag which is useful as a river immersion block. Further, since concrete has high pH (generally, pH of about 12 to 12.5), there is the probability of increasing the pH of river water in the periphery or delaying the growth of algae.

In recent, the need to provide a fish-way in a dam or weir provided in a river in order to enable fishes to move upstream and downstream or run has been recognized, and thus a dam or weir has been improved at various sites. The fish-way comprises a water channel (generally a water channel having a width of about 2 to 5 m) which is formed in a portion of the dam or weir to form a flow for permitting movement of fishes, and various types such as a slope way type, a ladder type, and the like are known. In a conventional fish-way, a water channel surrounded by concrete walls is generally provided by notching a portion of the dam or weir.

Such a conventional fish-way causes no problem in movement of fishes as long as there is no problem in the flow rate of water, the slope or step at the bottom, etc. However, since the concrete fish-way comprises a smooth bottom, and has difficulties in growing aquatic plants such as algae and the like, it has the problem of causing difficulties in movement of underwater living organisms (for example, crustacea, underwater insects, and the like) which crawl on a riverbed (surface projections of a stone, and aquatic plants) while scratching it with their claws or move while scratching the riverbed with their claws in a rapid stream. A method for solving this problem comprises providing a fish-way comprising foamed concrete to provide fine irregularity on the bottom of the fish-way. However, such a fish-way highly costs for construction, and thus has low practicability. In any way, since concrete had high pH, the concrete fish-way is undesirable for underwater living organisms which move along riverbeds.

A seaweed bed is a place for production of sea animals and plants in a coastal zone, and can be said to be a place necessary as a habitat for useful fishes and shellfishes, and algae, a spawning ground for fishes and shellfishes, a habitat, a bait site, or the like for young. In recent, the water purifying function of a seaweed bed has attracted attention, in which nitrogen and phosphorus in sea water are removed by being taken in marine plants or taken in other organisms through the food chain in a seaweed bed, or removed from water by deposition of suspended solids in the seaweed bed.

However, seaweed beds have recently rapidly disappeared and degenerated continuously due to the influences of reclamation of the coast, and pollution of sea water. Particularly, a phenomenon referred to as so-called "rocky shore denudation" has recently occurred in many coastal sea areas, causing great problems. Therefore, there is demand for establishing as quickly as possible a seaweed bed creating method in order to restore seaweed beds.

Conventional methods of creating a seaweed bed can be roughly divided into the following two types:

(1) A basement (mainly comprising a stone such as a natural stone, a concrete block, or the like) for growing marine algae is provided in a place for creating a seaweed bed, and seedlings or mother algae of marine algae are transplanted in the basement, and if required, management is carried out for growing marine algae.

(2) A place is selected, in which a seaweed bed is readily produced from the environmental condition, i.e., which is suitable for creating a seaweed bed from the viewpoint of environments such as water depth, water quality, ocean current, etc., and which is in a range where spores and seeds of marine algae can arrive at from an existing seaweed bed, so that the basement is set at the selected place to create a seaweed bed in a maintenance-free manner (i.e., basically without transplantation of seedlings, and growth control thereof).

However, of these methods, method (1) has the advantage that a place for creating a seaweed bed can be selected from a wide range, but basically, a seaweed bed is completely created in an artificial manner, and rootage and growth of seedlings or the like must be sufficiently controlled according to the environment of a place for creating a seaweed bed. Therefore, this method requires much labor and cost. By that reason, this method is not suitable for creating a large scale seaweed bed, at all.

While method (2) is a method in which a seaweed is created free of maintenance except that the basement is set, and thus has the advantage that the required labor and cost are significantly lower than method (1). However, since a place where a seaweed bed can be created is limited, this method has low versatility. Some reports describe that in order to create a seaweed bed in a place with no seaweed bed produced naturally by method (2) within an appropriate period of time, in considering the range where spores and seeds of marine algae can arrive at from an existing seaweed bed, a place at a distance of 100 m or less from an existing seaweed bed is preferably selected. Therefore, this method is thought to be difficult to create a seaweed bed in a place where seaweed beds disappear due to the so-called rocky shore denudation over the entire region of the peripheral sea area.

Disclosure of Invention

An object of the present invention is to provide an underwater immersion block having an excellent effect on growth of algae, breeding of fishes and shellfishes, and the like without causing an increase in pH of sea water and river water, and a method of producing the same and a method of creating a seaweed bed using the same.

In order to achieve the object, the present invention provides an underwater immersion block produced by a method , which comprises the following steps, that's to say,

the step of preparing a mixture composed of granular slag produced in the iron and steel making process; and
the step of carbonating the mixture to produce a carbonate, and agglomerating the mixture by making use of the produced carbonate as a binder.

The underwater immersion block, which is produced by the above method may be used as a submarine immersion block and a river immersion block.

The granule slag may be at least one slag selected from the group consisting of powdery granule slag, coarse grain slag, and small lump slag, or may be powdery granule slag or coarse grain slag subjected to metal removal treatment.

Furthermore, the present invention also provides a method of producing an underwater immersion block , which comprises the following steps:

the step of preparing a mixture composed of granular slag produced in the iron and steel making process;
the step of forming a packed bed using the mixture; and
the step of carbonating the mixture in the packed bed with carbon dioxide to agglomerate the mixture.

In such a case, the step of forming the packed bed may be carried out by forming a pile using the mixture.

And, furthermore, the present invention provides a method of creating a seaweed bed, which comprises the following steps:

the step of temporarily placing a heavy-weight material and immersing the material, which bring a seaweed bed to adhere and grow marine algae on the surface of the material;
the step of recovering the material and transporting it as a seed material to a place for creating a seaweed bed; and
the step of arranging another material for adhering marine algae thereto around the seed material to proliferate the marine algae on the seed material to the other material.

Brief Description of Drawings

Fig. 1 is a drawing illustrating a method of producing a submarine immersion block in accordance with the present invention.
Fig. 2 is a drawing illustrating an example of the production method shown in Fig. 1.
Fig. 3 is a drawing illustrating another method of producing a submarine immersion block in accordance with the present invention.
Fig. 4 is a drawing illustrating an example of the production method shown in Fig. 3.
Fig. 5 is a drawing illustrating a structure example in which a river immersion block of the present invention is spread or immersed on an artificial structure such as a fish-way or the like, an artificial river bed or the like.
Fig. 6 is a drawing illustrating a method of producing a river immersion block in accordance with the present invention.
Fig. 7 is a drawing illustrating an example of a method of producing a river immersion block in accordance with the present invention.

Best Mode for Carrying Out the Invention

This modes for carrying out the invention include a method of producing a submarine immersion block, a river immersion block and a method of producing the same, and a method of creating a seaweed bed.

Submarine Immersion Block

As a result of repeated experiment and research, the inventors found the following facts:

(1) Powder and granule, coarse grain or small lump slag, particularly such slag containing an appropriate amount of iron, is consolidated and agglomerated by using, as a binder, $CaCO_3$ or $CaCO_3$ and $MgCO_3$ produced by carbonation, and used as a submarine immersion block, thereby causing no increase in pH of sea water and exhibiting an excellent effect on the growth of marine algae.
(2) On the other hand, in a sea area which requires suppression of the occurrence of oligoaerobic sea water due to oxidation of iron and the excessive supply of iron to sea water, the submarine immersion block can be used. In such a case, powder and granule or coarse grain slag, which is subjected to metal removal treatment, is consolidated and agglomerated by using $CaCo_3$ ,or $CaCO_3$ and $MgCO_3$ ,as a binder. These sorts of carbonate are produced by carbonation. Without causing oligoaerobic sea water due to oxidation of iron and without the excessive supply of iron to sea water, there occurs no increase in pH of sea water. Furthermore, there exhibits an excellent effect on the growth of marine algae.
(3) An effective method for obtaining the above-described agglomerated submarine immersion block comprises piling or packing at least one slag selected from the group consisting of powder and granule slag, coarse grain slag, and small lump slag, otherwise selected from the group of powder and granule slag or coarse grain slag, which is subjected to metal removal treatment, to form a pile or packed bed with a desired density. And then, effecting carbonation occurs in the pile or packed bed in the presence of carbon dioxide to consolidate the slag. This method is capable of producing a block with any desired density and size according to the conditions of the sea bottom and ocean streams to which the block is applied. Furthermore, this method is capable of easily realizing a large lump block.

The present invention has been achieved on the basis of the above findings, and the present invention is characterized as follows:

(1) The present invention provides an underwater immersion block comprising, as a main raw material, slag produced in the iron and steel making process, wherein the slag is consolidated and agglomerated by using $CaCO_3$ produced in carbonation as a binder. The slag is at least one selected from the group consisting of powder and granule slag, coarse grain slag, and small lump slag. The slag may be powder and granule slag or coarse grain slag, which is subjected to metal removal treatment.
(2) The present invention provides an underwater immersion block comprising, as a main raw material, slag produced in the iron and steel making process, wherein the slag is consolidated and agglomerated by using $CaCO_3$ and $MgCO_3$ produced in carbonation as a binder. However, this invention includes cases in which $MgCO_3$ is present as a hydrate, hydroxide or double salt. The slag is at least one selected from the group consisting of powder and granule slag, coarse grain slag, and small lump slag. The slag may be powder and granule slag or coarse grain slag, which is subjected to metal removal treatment.
(3) The present invention provides an underwater immersion block comprising, as main raw materials, slag produced in the iron and steel making process and a powder and granule and/or coarse grain additive, wherein a mixture of the slag and the additive is consolidated and agglomerated by using $CaCO_3$ produced in carbonation as a binder. The slag is at least one selected from the group consisting of powder and granule slag, coarse grain slag, and small lump slag. The slag may be powder and granule slag or coarse grain slag, which is subjected to metal removal treatment.
(4) The present invention provides an underwater immersion block comprising, as main raw materials, slag produced in the iron and steel making process and a powder and granule and/or coarse grain additive, wherein a mixture of the slag and the additive is consolidated and agglomerated by using $CaCO_3$ and $MgCO_3$ produced in carbonation as a binder. However, this invention includes the cases in which $MgCO_3$ is present as a hydrate, hydroxide or double salt. The slag is at least one selected from the group consisting of powder and granule slag, coarse grain slag, and small lump slag. The slag may be powder and granule slag or coarse grain slag, which is subjected to metal removal treatment.
(5) A method of producing an underwater immersion block comprises mixing slag produced in the iron and steel making process and, if required, at least one selected from CaO, $Ca(OH)_2$, MgO, and $Mg(OH)_2$, forming a pile of the slag or a packed bed of the slag in any desired space, effecting carbonation of the pile or the packed bed in the presence of carbon dioxide to consolidate the slag, to obtain a block comprising the agglomerated slag. The slag is at least one selected from the group consisting of powder and granule slag, coarse grain slag, and small lump slag. The slag may be powder and granule slag or coarse grain slag, which is subjected to metal removal treatment.
(6) A method of producing an underwater immersion block comprises mixing slag produced in the iron and steel making process, a powder and granule and/or coarse grain additive, and, if required, at least one selected from CaO, Ca(OH)$_2$, MgO, and Mg(OH)$_2$, forming a pile of the slag or a bed packed with the slag in any desired space, effecting carbonation of the pile or the packed bed in the presence of carbon dioxide to consolidate the slag, to obtain a block comprising the agglomerated slag. The slag is at least one selected from the group consisting of powder and granule slag, coarse grain slag, and small lump slag. The slag may be powdery granule slag or coarse grain slag, which is subjected to metal removal treatment.

The present invention provides the underwater immersion block comprising the slag produced in the iron and steel making process as a main raw material. Although examples of the slag include blast furnace slag such as air-cooled blast furnace slag, water-granulated blast furnace slag, and the like; steel-making slag such as decarburized slag, dephosphorized slag, desulfurized slag, desiliconized slag, cast slag, and the like, which are produced in the steps of pre-processing, converter, casting, and the like; ore reducing slag; electric furnace slag; and the like; the slag is not limited to these types of slag. A mixture of at least two types of slag may be used.

Of these types of slag, examples of compositions of typical slag are given below.

(1) Decarburized slag ... T. Fe: 17.5%, CaO: 46.2%, SiO$_2$: 11.7%, Al$_2$O$_3$: 1.4%, MgO: 8.3%, MnO: 6.2%, P: 0.76%, S: 0.04%

(2) Dephosphorized slag ... T. Fe: 5.8%, CaO: 54.9%, SiO$_2$: 18.4%, Al$_2$O$_3$: 2.8%, MgO: 2.3%, MnO: 1.9%, P: 2.8%, S: 0.03%

(3) Desulfurized slag ... T. Fe: 10.5%, CaO: 50.3%, SiO$_2$: 10.0%, Al$_2$O$_3$: 5.4%, MgO: 1.1%, MnO: 0.4%, P: 0.13%, S: 1.8%

(4) Desiliconized slag ... T. Fe: 10.5%, CaO: 13.6%, SiO$_2$: 43.7%, Al$_2$O$_3$: 3.8%, MgO: 0.4%, MnO: 15.8%, P: 0.10%, S: 0.19%

(5) Water-granulated blast furnace slag ... FeO: 0.3%, CaO: 42.0%, SiO$_2$: 33.8%, MnO: 0.3%, MgO: 6.7%, Al$_2$O$_3$: 14.4%

Of the slag produced in the iron and steel making process, dephosphorized slag has a high P content, and desiliconized slag has a high MnO content. Although these types of slag thus cause difficulties in using as cement raw materials, they can be used as raw materials for the underwater immersion block of the present invention without any problem.

Although there are differences in content, the slag produced in the iron and steel making process contains a relatively large amount (generally several % by weight to about 30% by weight) of metal (iron such as granular iron or the like), and thus the metal of the slag is recovered for recycling iron to the iron and steel making process. In order to recover the metal, slag is crushed. Therefore, slag passed through the metal recovering step, which includes powder, coarse grain and small lump slag, is necessarily made to powdered, coarse granulated or made to small lump slag. The particles of slag passed through the metal recovering step generally have particle diameters on the cm order or less (for example, 5 cm or less).

The underwater immersion block of the present invention comprises at least one of powder slag, coarse grain slag, and small lump slag as a raw material. However, the slag used in the present invention may be at least one of powder slag, coarse grain slag, and small lump slag, and not necessarily be passed through the above-described metal recovering step.

The metal recovering step means the step of recovering the metal from slag in order to recycle the metal contained in the slag, and differs from metal removal for substantially removing the metal contained in slag. Therefore, in metal recovery, slag is generally not so finely ground as in metal removal, and thus slag after the recovery treatment still contains a great amount of metal. While in metal removal, slag is finely ground to powder or coarse grins so that the metal is completely removed except the metal inevitably remaining in the slag.

When such slag is used as a base material of the block for underwater immersion, generally, the slag need not have so a low iron content as when slag passed through metal removal, which will be described above, is used as the base material of the block, rather preferably contains an appropriate amount of iron (particularly, metallic iron such as granular iron, and material containing metallic iron). This is because an appropriate amount iron contained in slag is eluted to seawater to supply iron as nutrient salts to sea water, causing effective actions on the growth of marine algae. Therefore, the appropriate iron content of slag is 3% by weight or more.

The iron content of slag is controlled by the following two methods:

(a) The metal (granular iron or the like) basically contained in slag is partially or wholly left without being recovered, and used.

(b) The whole metal (except the metal which cannot inevitably be removed) contained in slag is substantially removed by metal removal, and then metallic iron or a metallic iron-containing material is added as an additive.

The method (b) has the following advantages:

(1) The method (a) in which the metal (granular iron or the like) basically contained in slag is partially left without being recovered is difficult to precisely control the amount of the metal left in slag. Namely, since the metal is recovered from slag by magnetic separation or the like, it is very difficult from the viewpoint of the properties of magnetic separation that the metal is recovered to leave a predetermined amount of metal. If this is possible, magnetic separation requires complicated control and operations. While in the method (b), the whole metal basically contained in slag is substantially removed, and metallic iron or a metallic iron-containing material is added, thereby permitting desired control of the iron content of slag.

(2) For the above reasons, in the method (a) in which iron (granular iron or the like) basically contained in slag is partially left without being recovered, it is impossible to select the shape and size of the metal left in slag. As described below, iron contained in slag which constitutes the block for underwater immersion is preferably so-called granular iron. However, when the metal is partially removed from slag by magnetic separation, such granular iron does not necessarily remain, but is rather removed to possibly leave the metal having a large shape. While in the method (b), any desired shape and size of the metallic iron or the like added to slag can be selected so that a preferred iron source such as granular iron or the like can be contained in slag.

Therefore, most preferable means for obtaining slag containing metallic iron or metallic iron-containing material comprises removing substantially the whole metal (except the metal which cannot inevitably be removed) contained in slag by metal removal, and then adding metallic iron or metallic iron-containing material as an additive.

As described below, metal removal is generally performed by grinding slag to powder or coarse grains, and then carrying out magnetic separation. Therefore, slag passed through metal removal treatment, which inherently includes powder or coarse grain slag without such a treatment, is inevitably powder or coarse grain slag. Generally, the particles of slag subjected to the metal removal treatment have particle diameters on the mm order or less.

In the above-mentioned metal removal, the metal in slag is preferably removed as much as possible except the metal which cannot inevitably be removed. The iron (metal) content of slag after metal removal is preferably less than 3% by weight. With such slag passed through metal removal, slag containing a desired content of iron including metallic iron such as granular iron or the like and/or metallic iron-containing material can be obtained.

For the metallic iron or metallic iron-containing material added to slag, the following matters are taken into consideration. One matter is that metallic iron or metallic iron-containing material having a large size does not interfere with molding of slag. The other is that the specific surface area of metallic iron or the like is increased to increase elution of iron from the block immersed in sea water. From the above viewpoints, metallic iron or the like having a small particle diameter and more or less uniform size is preferred. Therefore, granular iron is optimum. As the granular iron, not only the granular iron recovered from slag but also any desired granular iron which can be prepared can be used.

When the occurrence of oligoaerobic sea water due to oxidation of the metal contained in slag or the excessive supply of iron to sea water causes a problem according to the circumferences of a sea area in which the block is immersed, the slag used is subjected to metal removal, and then used as a raw material for the block with no metallic iron or metallic iron-containing material added.

Although there are differences in some degree of amount, the slag produced in the iron and steel making process contains a relatively large amount of metal, and most of the metal in slag can be recovered even by the above-described metal recovery treatment. However, since slag components are mixed with the metal in a state where they are entwined with each other, the metal cannot be sufficiently removed by grinding in the same level as the usual metal recovering step, and thus a significant amount of metal still remains in slag after the metal recovering step. When the block obtained from slag subjected to only metal recovery is immersed in sea water, the problem of causing oligoaerobic sea water due to oxidation of the metal in slag or the excessive supply of iron to sea water occurs according to the sea area where the block is immersed. Therefore, as the block immersed in such a sea area, slag passed through the metal removing step of removing the principal metal is used as a raw material.

As described above, since slag components are mixed with the metal in a state where they are entwined with each other, it is necessary to remove the metal of slag in a powdery or coarse granular form by metal removal using magnetic separation or the like. Therefore, slag passed through the metal removal processing, which includes powder or coarse grain slag, is inevitably powder or coarse grain slag. Generally, the particles of slag passed through the metal removal treatment have particle diameters on the mm order or less (for example, 5 mm or less).

Therefore, for the block for underwater immersion of the present invention which is applied to a sea area causing the problems of causing oligoaerobic sea water and the excessive supply of iron to sea water, powder and granule and/or coarse grain slag passed through the metal removal treatment is used as a raw material.

In the metal removal, the metal of slag is preferably removed as much as possible except the metal inevitably remaining. Generally, the iron content (metal) of slag is preferably less than 3% by weight.

In the present invention, the block is produced by consolidating (carbon dioxide solidification) and agglomerating at least one selected from the group consisting of powder and granule slag, coarse grain slag, and small lump slag, or powder and granule and/or coarse grain slag as a main raw material using $CaCO_3$ or $CaCO_3$ and $MgCO_3$ produced in carbonation as a binder. It was found that the block is a suitable base material as a block for a seaweed bed, a block for reef construction, or a block for underwater immersion in a fishing bank. The above-described at least one slag includes slag to which an appropriate amount of metallic iron and/or metallic iron-containing material is added after the metal removal treatment.

Consolidation of a granular material using $CaCO_3$ produced in reaction of CaO and $CO_2$, i.e., carbonation , is a technique known for a long time. A granular material containing CaO is placed in an atmosphere of carbon dioxide to produce $CaCO_3$ according to the reaction formula below, thereby causing consolidation of particles using $CaCO_3$ as a binder.

$$CaO + CO_2 \rightarrow CaCO_3$$

Examples of conventional techniques proposed as the technique utilizing carbonation include a method of producing a hardened body for building materials and the like using a mixture of steel air-granulated slag and water as a raw material (for example, Japanese Unexamined Patent Publication No. 58-74559), a method of producing unburned pellets (for example, Japanese Unexamined Patent Publication Nos. 57-92143, 58-48642, and 58-133334), and the like. However, these conventional techniques aim at producing a hardened product or unburned pellets having desired strength within a short time, and thus do not relate to the block which is obtained by consolidating powder and granule, coarse grain or small lump slag or powder and granule or coarse grain slag subjected to the metal removal treatment by carbonation , and which is a suitable material as a block for underwater immersion in seaweed beds or the like.

In regard to the granular material containing MgO, this material is placed in an atmosphere of carbon dioxide to produce $MgCO_3$ by carbonation, thereby causing consolidation of particles using $MgCO_3$ as a binder. $MgCO_3$ produced by carbonation of MgO takes various forms such as an anhydride, a hydrate (for example, a dihydrate, trihydrate, pentahydrate, or the like), a hydroxide (basic magnesium carbonate), and the like. For example, a trihydrate of $MgCO_3$ is produced according to the following reaction formula:

$$MgO + CO_2 + 3H_2O \rightarrow MgCO_3 \cdot 3H_2O$$

The slag produced in the iron and steel making process generally contains an appreciable amount of CaO (generally, 20% by weight to 60% by weight). The block for underwater immersion of the present invention is obtained by consolidating and agglomerating slag particles (when containing an additive, additive particles and slag particles) using, as a binder, $CaCO_3$ changed from CaO or $Ca(OH)_2$ (including CaO and $Ca(OH)_2$ added as occasion demands) changed from CaO, which is contained in at least one slag selected from the group consisting of powder and granule slag, coarse grain slag, and small lump slag, or powder and granule and/ or coarse grain slag subjected to the metal removal treatment, by the above reaction.

Slag mostly contains CaO and some amount of MgO, and the block for underwater immersion of the present invention, which comprises slag as a raw material, is obtained by consolidating and agglomerating slag particles (when containing an additive, additive particles and slag particles) using, as a binder, $CaCO_3$ and $MgCO_3$ changed from MgO or $Mg(OH)_2$ (including MgO and $Mg(OH)_2$ added as occasion demands) changed from MgO by the above carbonation reaction

As described above, $MgCO_3$ produced by carbonation of MgO takes various forms such as an anhydrate, a hydrate, a hydroxide, and the like. As $MgCO_3$ contained as a binder in the block for underwater immersion of the present invention, any one of the $MgCO_3$ forms may be used. Examples of $MgCO_3$ hydrates include $MgCO_3 \cdot 2H_2O$, $MgCO_3 \cdot 3H_2O$, $MgCO_3 \cdot 5H_2O$, and the like; examples of hydroxides (basic magnesium carbonate) include $MgCO_3 \cdot Mg(OH)_2 \cdot 3H_2O$, $4MgCO_3 \cdot Mg(OH)_2 \cdot 4H_2O$, $4MgCO_3 \cdot Mg(OH)_2 \cdot 5H_2O$, $4MgCO_3 \cdot Mg(OH)_2 \cdot 8H_2O$, and the like. In some cases, $MgCO_3$ is combined with other salts to form various double salts, and $MgCO_3$ present in such a double salt may be sued.

In some cases, CaO and MgO contained in the slag produced in the iron and steel making process are partially or entirely changed to $Ca(OH)_2$ and $Mg(OH)_2$ due to absorption of water or other causes with time. However, this causes no problem in the slag used in the present invention, and $Ca(OH)_2$ and $Mg(OH)_2$ are also changed to $CaCO_3$ and $MgCO_3$, respectively, by carbonation to obtain the block for underwater immersion of the present invention.

The block for underwater immersion of the present invention has the advantages below as a block for seaweed beds, a block for reef construction, or block for fishing banks or the like.

(1) Since CaO (or $Ca(OH)_2$ produced from CaO) contained in slag is mostly changed to $CaCO_3$, an increase in pH of sea water due to CaO can be prevented. On the other hand, slag contains an appropriate amount of iron (particularly, metallic iron or metallic iron-containing material), and thus iron is eluted to sea water to supply iron as nutrient salts to sea water, thereby causing effective actions on the growth of marine algae.

(2) The agglomerated material obtained by carbon dioxide solidification of at least one slag selected from the group consisting of powder and granule slag, coarse grain slag, and small lump slag, or powder and granule slag and/or coarse grain slag subjected to metal removal processing entirely (the surface and inside) has porous properties, making easy adhesion of marine algae to the surface of the block. In addition, since the inside of the block is also porous, the components (for example, soluble silica and iron described below) contained in the block, which are effective for accelerating the growth of marine algae, are readily eluted to sea water. It is thus possible to effectively promote the growth of marine algae, as compared with cases in which the massive slag is used as the block for underwater immersion without any processing, and concrete fishing banks comprising an aggregate made of slag.

Particularly, in order to effectively promote the proliferation and growth of marine algae on the block immersed in a place in which a seaweed bed or the like is created, it is necessary to promote the growth of young of marine algae on the surface of the block. From this viewpoint, the effective component eluted from the block for underwater immersion of the present invention to water more effectively acts on marine algae which are present nearer the block, and is thus particularly effective for the growth of young of marine algae. It is thus possible to effectively promote the growth of young of marine algae.

(3) When agglomerated slag is used as the block for underwater immersion without any treatment, the size thereof is generally limited (generally, about 800 mm at maximum) according to restrictions such as the method of cooling molten slag and conditions therefor, and thus it is difficult to obtain large agglomerated blocks having a uniform size. While the block obtained by carbon dioxide solidification of at least one slag selected from the group consisting of powder and granule slag, coarse grain slag, and small lump slag, or powder and granule slag and/or coarse grain slag subjected to metal removal can be controlled to any desired size by selecting the shape at the time of carbon dioxide solidification or the shape quarried after carbon dioxide solidification, thereby easily obtaining a stone for seaweed beds, and a large stone preferable for fishing banks or the like.

(4) The block for underwater immersion preferably has an optimum density (specific gravity) according to the conditions of the sea bottom, ocean currents, etc. For example, when a block with a high density is immersed to the sea bottom on which sludge is deposited, the block sinks into the sludge and thus does not function as a block for a seaweed bed or a fishing bank. However, the block obtained by carbon dioxide solidification of at least one slag selected from the group consisting of powder and granule slag, coarse grain slag, and small lump slag, otherwise powder and granule slag and/or coarse grain slag subjected to metal removal treatment, can be controlled to any desired density by appropriately controlling the bulk density (degree of consolidation) at the time of carbon dioxide solidification.

(5) In the block obtained from powder and granule slag and/or coarse grain slag subjected to metal removal treatment, the main metal is removed, and thus the problem of causing oligoaerobic sea water due to oxidation of the metal or the excessive supply of iron due to elution to sea water does not occur when the block is applied to a sea area having the problem of causing oligoaerobic sea water or excessive supply of iron to sea water. The block for underwater immersion obtained from such slag from which the metal is removed contains components, which contribute to carbon dioxide solidification of slag, in amounts relatively increased corresponding to the removal of the metal. This is advantageous for securing the strength of the block.

The block for underwater immersion of the present invention is obtained by tightly consolidating slag having small particle diameters using, as a binder, $CaCO_3$ or $CaCO_3$ and $MgCO_3$ produced by carbonation, and thus has sufficient strength, thereby causing neither crack nor fracture even when a shock is applied to the block in transport or immersion into sea water, or allowed to stand in sea water for a long time.

The block for underwater immersion of the present invention may contain at least one slag selected from the group consisting of powder and granule slag, coarse grain slag, and small lump slag, or powder and granule slag and/or coarse grain slag subjected to metal removal treatment, as well as various additives (powder and granule, coarse grain or small lump additives) in order to achieve a preferable composition according to the conditions of a sea area to which the block is applied, etc. Examples of such additives include powder and granule or coarse grain materials (soluble silica and soluble silica-containing material) serving as soluble silica sources, powder and granule or coarse grain materials (metallic iron, metallic iron-containing material, iron oxide, and iron oxide-containing material) serving as iron sources, powder and granule or coarse grain CaO, and the like. When CaO is contained as an additive in the block for underwater immersion, it is necessary that at least a portion of CaO contained in slag or CaO significantly added to slag must be left as unreacted CaO after carbon dioxide solidification.

The soluble silica and iron sources (iron and iron oxide) contained in the block for underwater immersion effective act on the growth of marine algae due to elution to sea water. From the viewpoints of elution to sea water and the action on the growth of marine algae, particularly, metallic iron and metallic iron-containing materials among the iron sources are preferred. However, when the block for underwater immersion obtained from powder and granule slag and/or coarse grain slag subjected to metal removal treatment is applied to a sea area causing the problem of causing oligoaerobic sea water or the excessive supply of iron to sea water, such metallic iron and metallic iron-containing material are not added.

Furthermore, when the sea bottom contains a large amount of phosphorus causing a red tide or sulfur causing a blue tide, a small amount of CaO contained in the block for underwater immersion is effective to prevent the occurrence of a red tide or blue ride due to adsorption of phosphorus or sulfur. Although, as described above, the block containing a large amount of CaO has the problem of increasing the pH of sea water, it is sufficient for adsorption of phosphorus or sulfur that the block contains a small amount of CaO remaining after carbon dioxide solidification.

Examples of powder and granule or coarse grain materials serving as soluble silica sources include powder and granule or coarse grain soluble silica and/or soluble silica-containing materials. As the soluble silica-containing materials, fly ash produced by coal combustion in a thermal power plant or the like, clinker ash, and the like. The fly ash contains about 45 to 75% by weight of soluble silica, and the clinker ash contains about 50 to 65% by weight of soluble silica.

Since water-granulated blast furnace slag also contains a relatively large amount of soluble silica, the slag used is partially or entirely replaced by water-granulated blast furnace slag, for example, a mixture of steelmaking slag and water-granulated blast furnace slag is used, to obtain the same effect as the case in which an additive serving as a soluble silica source is added.

Powder and granule or coarse grain materials serving as iron sources include powder and granule or coarse grain metallic iron or materials containing metallic iron, powder and granule or coarse grain iron oxide and/or materials containing iron oxide, and the like. Particularly, as powder and granule or coarse grain materials easily obtained at low cost, iron-containing dust and mill scales produced in the steel manufacturing process can be used. General iron-containing dust is steel making dust which contains about 75% of iron oxide in terms of Fe. The mill scales also contain about 70% of iron oxide in terms of Fe.

When a large block having a high specific gravity is immersed to the sea bottom on which sludge is deposited, as described above, the block sinks into the sludge, thereby causing no function as a block for seaweed beds, fishing banks, or the like. Therefore, the block for underwater immersion, which is used in a sea area in which sludge is deposited, preferably comprises slag having a relatively low specific gravity. Specifically, it is effective to use water-granulated slag having a lower specific gravity than other slag as at least a portion of the main raw material.

Since the block for underwater immersion of the present invention has relatively porous properties, the above-described effects can be obtained. Although the void ratio of the block is not limited, the void ratio is preferably about 10 to 70%.

The method of producing the block for underwater immersion of the present invention will be described below.

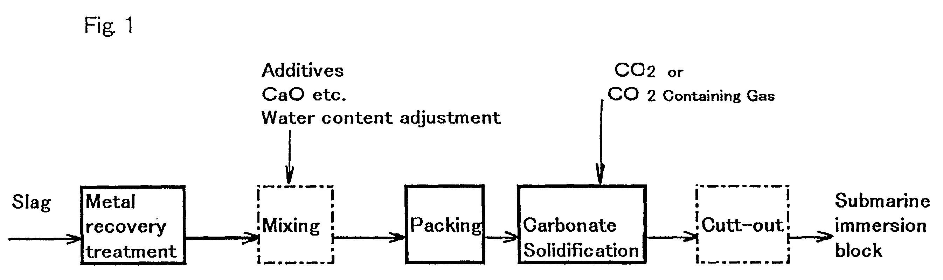

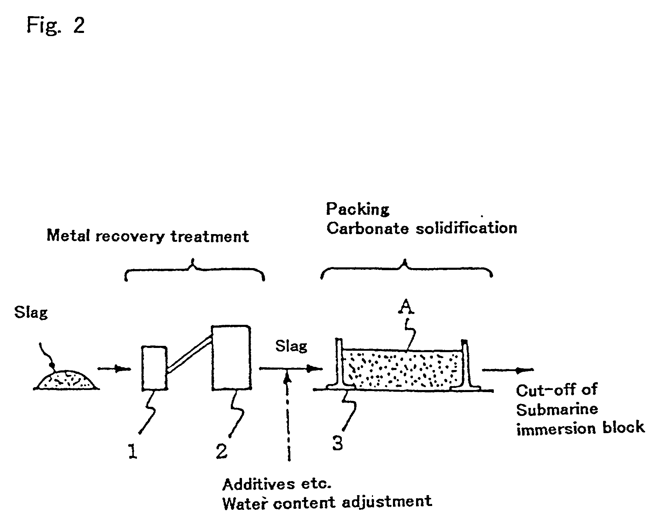

Fig. 1 shows an example of the production flow of the method of the invention, and Fig. 2 shows an example of a production process according to the production flow shown in Fig. 1. First, the metal is recovered from slag produced in the iron and steel making process to remove an appreciable portion of the metal contained in the slag. Generally, in the metal recovering step, slag is crushed to particle diameters ( for example, 5 cm or less) on the cm order or less by a crusher or the like to form powder and granule, coarse grain or small lump slag, followed by recovery of the metal. The slag preferably has a particle diameter which permits recovery of the metal. Therefore, even when slag comprises relatively coarse particles due to the properties thereof, if the metal can be recovered from the slag, the slag is preferably crushed to a particle size which permits metal recovery.

In the recovery of the metal, the content of the metal in slag after metal recovery treatment may be not so low as in metal removal processing which will be described below. This is because an appropriate amount of iron (particularly, metallic iron or metallic iron-containing material) contained in slag is eluted to sea water to supply iron as nutrient salts to sea water, causing an effective action on the growth of marine algae. Therefore, recovery may be generally performed to leave 3% by weight of metal in slag after recovery treatment.

Some types of slag are conveyed in a state where they are naturally broken to a particle diameter which permits metal recovery (i.e., a state where they are naturally broken to powder and granule, coarse grain or small lump slag). Such slag need not be subjected to the above-described crushing treatment. Examples of such cases include a case in which CaO contained in slag reacts with water in air, rain water or cooling spray water to produce $Ca(OH)_2$ after cooling solidification, causing breakage and powdering due to expansion of slag during the production of $Ca(OH)_2$, a case in which $2CaO \cdot SiO_2(C_2S)$ is produced in slag having a basicity $(CaO/SiO_2)$ of about 2, causing breakage and powdering of slag due to transformation and expansion of $C_2S$ in the slag cooling step, and the like. For slag which is already degraded to powder, coarse grains or small lumps having particle diameters, which permit metal recovery, due to the above causes, the metal can be recovered without any treatment.

Generally, the metal recovery treatment is carried out by magnetic separation (the method of removing granular iron from slag with a magnet) using a magnetic classifier or the like, the recovery method is not limited to this. For example, it is possible to use gravity separation which employs differences in specific gravity between the metal component and the slag components, such as wind separation or the like.

In the metal recovery treatment, the fundamental metal component of slag is recovered. In Fig. 2, reference numeral 1 denotes a crusher, and reference numeral 2 denotes a magnetic classifier.

The slag subjected to the above-described metal recovery treatment is at least one slag selected from the group consisting of powder and granule slag, coarse grain slag, and lump slag, and then sent to the next step of carbon dioxide solidification, or the preprocessing step therefor. However, raw material slag may be at least one slag selected from the group consisting of powder and granule slag, coarse grain slag, and lump slag, and is thus not necessarily subjected to the above-mentioned metal recovering step.

Although there are differences in ratio, which means the ratio of powder and granule slag/coarse grain slag, most types of slag subjected to the metal recovering step generally contain a predetermined ratio or more of powder and granule or coarse grain slag. Therefore, even when slag contains slag lump particles having relatively large particle diameters, the spaces between the slag lump particles are filled with powder and granule or coarse grain slag, thereby causing substantially no problem in carbon dioxide solidification for maintaining the predetermined strength of slag particles. However, when slag substantially comprises only lump particles, or when slag contains a relatively high ratio of lump particles, the area of contact between the slag particles is decreased, thereby causing a trouble in carbon dioxide solidification for maintaining the predetermined strength of slag particles. Therefore, in this case, the grain size is preferably controlled so as to increase the ratio of powder and granule or coarse grain slag.

In regard to iron contained in slag, the metal (granular iron or the like) basically contained in slag may be partially or wholly left without being recovered, and used. However, as described above, in order to control the iron content of slag to any described value, and contain a preferable iron source such as granular iron or the like in slag by arbitrarily selecting the shape and size of iron contained in slag, a method is preferably employed, in which the metal in slag is substantially entirely (except the metal which cannot inevitably be removed) is removed by the metal removal treatment, and then metallic iron and/or metallic iron-containing material is added as an additive.

Although the metal removal treatment is generally performed in a state in which slag is ground by a crusher or the like to a particle diameter (for example, 5 mm or less) on the mm order or less, slag may have a particle diameter which permits metal removal treatment. Therefore, if slag comprises relatively coarse grains due to the properties thereof, when the metal can be removed from the slag, the slag may be ground to a particle diameter which permits metal removal. For slag which is already degraded to powder and granules or coarse grains by natural powdering or the like, in some cases, the above-described grinding step is unnecessary. In the metal removal treatment, the metal contained in slag is preferably removed as much as possible except the metal components which inevitably remain in the slag, and the metal content in the slag after metal removal is preferably less than 3% by weight.

Generally, the metal removal treatment is carried out by magnetic separation (the method of removing granular iron from slag with a magnet) using a magnetic classifier or the like, the recovery method is not limited to this. For example, it is possible to use gravity separation which employs differences in specific gravity between the metal component and the slag components, such as wind separation or the like.

Then, an appropriate amount of metallic iron such as granular iron and/or metallic iron-containing material is added to the slag subjected to the metal removal treatment to obtain slag having a desired iron content and containing metallic iron or metallic iron-containing material. The thus-obtained slag is powder and granule and/or coarse grain slag containing an appropriate amount of metallic iron and/or metallic iron-containing material, and is then sent to the next step of carbon dioxide solidification or the pre-processing step therefor. As the metallic iron and/or metallic iron-containing material added to slag, granular iron is optimum. As the granular iron, not only granular iron recovered from slag but also any desired granular iron which can be prepared can be used.

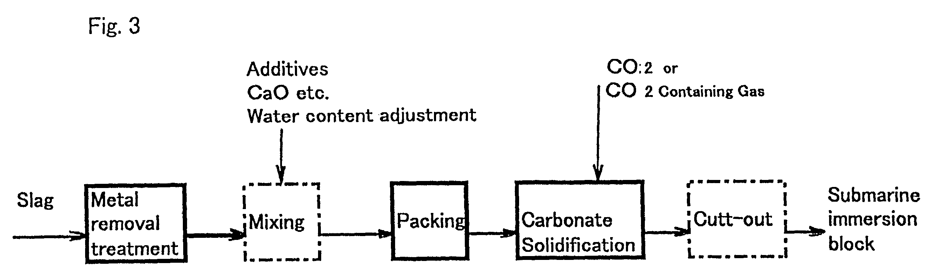

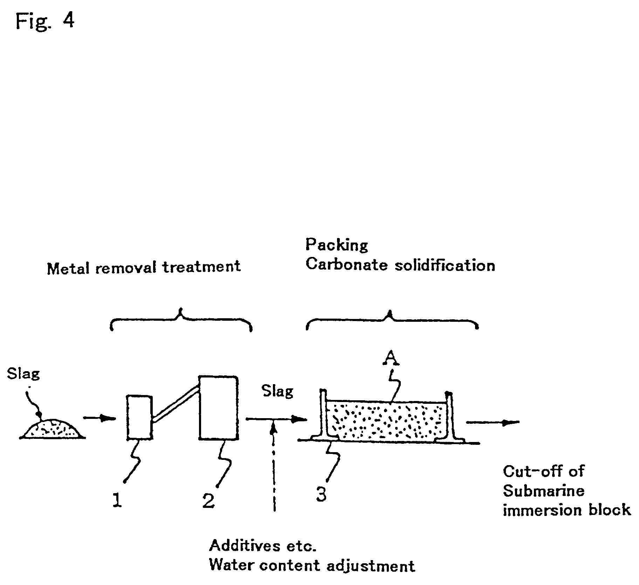

Fig. 3 shows an example of the production flow in which a block for underwater immersion is produced with no metallic iron nor metallic iron-containing material added to slag after metal removal treatment, and Fig. 4 shows an example of a production process according to the production flow. First, slag produced in the iron and steel making process is subjected to metal removal treatment to remove the main metal component. Since the slag components are generally mixed with the metal in slag in a state in which they are closely entwined with each other, slag must be crushed to powder and granules or coarse grains for metal removal treatment. Therefore, slag is generally crushed by a crusher or the like to particle diameters (for example, 5 mm or less) on the mm order or less, followed by metal removal. However, the slag may have a particle diameter which permits metal removal. Therefore, even if the slag comprises relatively coarse particles due to the properties thereof, when the metal can be recovered from the slag, the slag is preferably crushed to a particle size which permits metal removal.

In the removal of the metal, the metal in the slag is preferably removed as much as possible except the metal component which inevitably remains in the slag, and the metal content in the slag after metal removal processing is preferably less than 3% by weight.

As described above, some types of slag are conveyed in a state where they are naturally degraded to a powder or grains having particle diameters which permit metal removal. Such slag need not be subjected to the above-described crushing processing. The causes for the natural powdering slag are as described above. For slag which is already degraded to powder or coarse grains having particle diameters permitting metal removal due to the above causes, the metal can be removed without any treatment.

Generally, the metal removal treatment is carried out by magnetic separation (the method of removing granular iron from slag with a magnet) using a magnetic classifier or the like, the recovery method is not limited to this. For example, it is possible to use gravity separation which employs differences in specific gravity between the metal component and the slag components, such as wind separation or the like.

In the metal removal treatment, the fundamental metal component of slag is removed. In Fig. 4, reference numeral 1 denotes a crusher, and reference numeral 2 denotes a magnetic classifier.

The slag subjected to the above-described metal removal is power and granule and/or coarse grain slag, and then sent to the next step of carbon dioxide solidification, or the pre-processing step therefor.

Then, an additive is added to at least one slag selected from the group consisting of powder and granule slag, coarse grain slag and lump slag, or powder and granule and/or coarse grain slag subjected to the metal removal processing according to demand. Further, when slag is short of CaO or MgO necessary for carbonation reaction, at least one selected from CaO, Ca(OH)$_2$, MgO, and Mg(OH)$_2$ is added and mixed with slag according to demand. Examples of such additives include powder and granules or coarse grains (soluble silica and soluble silica-containing material) serving as soluble silica sources, powder and granules or coarse grains (metallic iron, metallic iron-containing material, iron oxide, and iron oxide-containing material) serving as iron sources, CaO, and the like. Typical examples of these materials are as described above.

Of these materials, soluble silica and iron sources (metallic iron and iron oxide) are eluted to sea water to cause effective actions on the growth of marine algae. From the view points of the property of elution to sea water and the action on the growth of marine algae, particularly metallic iron and metallic iron-containing materials among the iron sources are preferred. However, for the block for underwater immersion which is applied to a sea area having the problems of sea water and excessive supply of iron to sea water, and which is obtained from powder and granule and/or coarse grain slag subjected to the metal removal treatment, these metallic iron and metallic iron-containing material are not added.

Examples of the method of mixing slag and additive raw materials such as additives, CaO, and the like, include a method in which slag discharged from a metal recovering equipment or metal removing equipment is mixed with additive raw materials in a hopper, a method in which additive raw materials are added to and mixed with slag subjected to metal removal treatment in the metal recovering equipment or metal removing equipment, a mixing method using a heavy machinery such as a shovel or the like, and the like. Any of these methods can be used.

In this step, the water content of slag can also be adjusted according to demand. Water content adjustment will be described later.

The slag to which the additives are added, and in which the water content is adjusted according to demand is piled or packed in any desired space for carbon dioxide solidification.

Although the slag may be piled in open air, the pile of the slag is preferably covered with a sheet or the like so that the blown carbon dioxide gas sufficiently flows over the entire pile, and the slag is avoided from scattering or flowing due to rain water or the like.

In order to pile or pack the slag, for example, a three-side pit surround by walls, a four-side frame or container by walls, or the like can be used. Of these means, when slag is piled or packed in a pit, like in open-air piling, a pile or packed bed is preferably covered with a sheet or the like. When a frame or container is used, it is preferable to cover the packed bed of slag with a sheet, or provide a cover. Each of Figs. 2 and 4 shows a state in which packed bed A is formed in a frame 3.

The amount of the slag piled or packed is not limited, and for example, the amount of piling or packing may be several tons to hundreds tons, or an amount corresponding to one block to tens blocks. The amount is any desired value. However, even when a large amount of slag is piled or packed, the pile or packed bed is crushed by a heavy machinery or the like after carbon dioxide solidification to make it easy to quarry a block stone. In addition, such a block stone quarried by crushing has the advantage that it has an uneven fracture surface useful for adhesion of marine algae. Therefore, from the viewpoints of productivity and the function as a stone for seaweed beds, fishing banks, or the like, the amount of the slag piled or packed is preferably large to some extent.

In addition, the bulk density (consolidation degree) of the pile or packed bed of slag is preferably adjusted according to the density of a block to be produced. Namely, the density of a block for underwater immersion is preferably adjusted according to the conditions of the sea bottom, etc. For example, when the sea bottom is made of mud or sludge, it is preferable to use a block having a relatively low density so as to prevent the block from sinking into the mud or sludge. On the other hand, when the sea bottom is made of a shore reef or the like, a block having a relatively high density is preferably used for preventing the block from flowing in the ocean currents. Since the adhesion of marine algae, the degree of growth thereof, and the property of elution of effective components from the block depend upon the porosity (void ratio) of the block, in some cases, the porosity of the block is preferably adjusted according to the conditions of a sea area to which the block is applied.

The density of the stone produced by the method of the present invention depends upon the bulk density (consolidation degree) of the pile or packed bed of slag, and thus the density of the block can easily be adjusted by controlling the degree of compaction of the pile or packed bed of slag to adjust the bulk density thereof according to demand.

Although the degree of compaction of the slag pile or packed bed is any desired degree, compaction is made so that the ratio of bulk specific gravity/true specific gravity is in the rang eof 0.3 to 0.9, i.e., the void ratio of the pile or packed bed is about 70 to 10%.

The slag pile or packed bed can be compacted by a method in which the pile or packed bed is compacted by using a heavy machinery from above, a method in which the pile or packed bed is compacted by applying vibrations thereto, or the like. In this step, the degree of compaction is adjusted to control the bulk density of the pile or packed bed. Particularly, in producing a block having a low density, the slag piled or packed can be subjected to carbon dioxide solidification without compaction.

As a typical example of the compaction method, for example, when the pile or packed bed in the above-described pit, frame, or container is compacted, a line showing a target volume is indicated on the inside of the pit, frame, or container so that after slag having a known weight is charged, compaction is made until the top of the pile of packed bed is at the height of the weighing line.

After the bulk density of the slag pile or packed bed is adjusted as described above, carbonation reaction is produced in the pile or packed bed in the presence of carbon dioxide to solidify the slag with carbon dioxide. Specifically, carbon dioxide or carbon dioxide-containing gas is blown into the slag pile or packed bed, or the slag pile or packed bed is placed in an atmosphere of carbon dioxide or carbon dioxide-containing gas to solidify the slag with carbon dioxide.

Although the method of blowing carbon dioxide or carbon dioxide-containing gas into the slag pile or packed bed is not limited, it is most effective that gas blowing means is provided at the bottom of the slag pile or packed bed so as to blow the gas through the gas blowing means. Specifically, a gas supply pipe or hose is arranged at the bottom of the slag pile or packed bed (the floor when the pit, frame or container is used) with an appropriate arrangement density so that carbon dioxide or carbon dioxide-containing gas can be blown from gas nozzles provided in the pipe or hose with an appropriate pitch (for example, 30 to 300 mm x 40 to 400 mm pitch).

As the method of placing the slag pile or packed bed an atmosphere of carbon dioxide or carbon dioxide-containing gas, a method can be employed, in which the slag pile or packed bed is placed in an airtight space (including a container or the like) into which carbon dioxide or carbon dioxide-containing gas is blown in any desired form.

Although preferable examples of the carbon dioxide-containing gas include lime burning plant exhaust gases (generally, $CO_2$ about 25%), heating furnace exhaust gases (generally, $CO_2$ about 6.5%), and the like, the carbon dioxide-containing gas is not limited to these gases. When the carbon dioxide concentration of the carbon dioxide-containing gas is too low, the problem of decreasing the processing efficiency occurs, without any other problem. Therefore, although the carbon dioxide concentration is not limited, the carbon dioxide concentration is preferably 3% or more for efficient processing.

Also the amount of the carbon dioxide or carbon dioxide-containing gas blown is not limited, and the gas may be blown so that the slag pile or packed bed does not flow. However, as a standard, about 0.004 to 0.5 $m^3$/min·t is preferably securely blown. Also the gas blowing time (carbonation time) is not limited, as a standard, the gas is preferably blown to the time when the amount of carbon dioxide ($CO_2$) blown is 3% or more of the weigh of slag, i.e., until the amount of carbon dioxide ($CO_2$) supplied is 15 $m^3$ or more per ton of material.

Although the carbon dioxide or carbon dioxide-containing gas blown into the slag pile or packed bed is at room temperature, the gas temperature higher than room temperature is advantageous because reactivity is increased accordingly. However, with excessively high gas temperatures, $CaCO_3$ is decomposed into CaO and $CO_2$, and $MgCO_3$ is decomposed into MgO and $CO_2$, and in use of high temperature gas, it is thus necessary to use a gas of temperature which does not cause such decomposition.

In order to solidify slag with carbon dioxide using reaction of CaO, MgO and carbon dioxide, water is required. Although the optimum moisture content depends upon the grain size of slag, etc., the moisture content of slag before the start of carbonation is preferably in the range of about 3 to 10%. This is because dissolution of CaO, MgO and carbon dioxide in water accelerates carbonation reaction. Therefore, carbonation is preferably produced in slag in the presence of carbon dioxide after the water content is adjusted to the optimum moisture value according to demand. When the water content of slag is excessively low, it is preferable that water is added to slag in the mixing step shown in Figs. 1 and 3 to adjust the water content to increase the water content of slag. Also, carbon dioxide or carbon dioxide-containing gas is blown into water to be saturated with $H_2O$, and then blown into the pile or packed bed so that drying of the slag can be prevented, thereby accelerating carbonation reaction. Alternatively, the water content of the mixture may be adjusted to a water content value so that the agglomerated material after carbonation has maximum compressive strength. The water content value is determined as follows:

(a) Any desired amount of water larger than the water absorption of the raw material slag particles is added to 100 parts by weight of raw material slag to prepare raw material slag at three levels or more. The water absorption is the water absorption of fine aggregate or coarse aggregate defined in JIS A1109 or A1110.
(b) The raw material slag at each of the levels is packed in a frame so that the dry porosity is constant to form a packed bed.
(c) A predetermined amount of humidified carbon dioxide of 10 to 40°C is blown into the packed bed, and then carbonation curing is performed for a predetermined time to solidify the raw material slag.
(d) The compression strength of the solidified slag is measured to determine the maximum compressive strength. A water content value corresponding to the maximum value is considered as the optimum water content.

As described above, carbon dioxide or carbon dioxide-containing gas is supplied to the slag pile or packed bed so that $CaCO_3$ or $MgCO_3$ is produced by reaction of CaO (or $Ca(OH)_2$) or MgO (or $Mg(OH)_2$) and carbon dioxide. As a result, the slag particles (slag particles and additive particles when additives are mixed) are consolidated by $CaCO_3$ or $CaCO_3$ and $MgCO_3$ serving as a binder.

After the completion of carbon dioxide solidification, the pile or packed bed is crushed to an appropriate size by a heavy machinery or the like according to demand to quarry a submarine immersion agglomerated block. Therefore, a block of any desired size can be obtained according to the size quarried. Generally, a agglomerated block is quarried in a size of 80 to 1500 mm. In crushing to quarry a block, an uneven crushed surface to which marine algae readily adhere is produced in the block.

In the method of the present invention, the volume of the packed bed is sufficiently decreased so that a block can be used without quarrying.

The production method of the present invention has the following advantages:

(1) Since carbon dioxide solidification is performed in a state wherein slag is formed in the pile or packed bed, the bulk specific gravity is controlled by controlling the compaction degree of the pile or packed bed so that the density of a submarine immersion block can simply be controlled. As described above, the density and porosity of the submarine immersion block are preferably appropriately adjusted according to the conditions of the sea bottom and ocean currents. Such arbitrary and simple adjustment is significantly advantageous for the method of producing a submarine immersion block. Although the technique of solidifying granulated pellets or the like is conventionally known, this granulation technique is difficult to widely adjust the density of a material to be processed.
(2) In the method of the present invention, slag is solidified with carbon dioxide in a state where the slag is formed in a pile or packed bed, and after carbon dioxide solidification, the pile or packed bed is crushed to an appropriate size to quarry a agglomerated block of a desired size, or the packed bed is used as a agglomerated block as it is. Therefore, the size of the quarried block and the size of the packed bed are appropriately selected to obtain the block of any desired size (for example, 80 to 1500 mm), easily obtaining a agglomerated block preferable as a block for seaweed beds, fishing banks, or the like. In the conventional technique of solidifying the granulated pellets or the like with carbon dioxide, the upper limit of the size of the agglomerated product is about 30 to 50 mm at maximum, and lumps of small size are also inevitably produced. Therefore, since a large bulk block can be obtained, the method of the present invention is advantageous as the method of producing a submarine immersion block.
(3) In the method of crushing the slag pile or packed bed by a heavy machinery or the like to quarry a agglomerated block after carbon dioxide solidification, a agglomerated block having an irregular surface (crushed surface) to which marine algae easily adhere can be obtained.

As described above, the submarine immersion block of the present invention can exhibit its excellent properties when used as a block for seaweed beds, a block for reef construction, fishing banks, or the like. However, besides these purposes, of course, the block of the present invention can also be used for various purposes, for example, such as a block for sea bottom mounds, a block for modifying or purifying the sea bottom, etc. Even when the block is used for these purposes, the above-described excellent effects on growth of marine algae, and the like are exhibited.

Example 1

Converter slag powder (slag after metal recovery, containing lump slag, and having an iron content of 12% by weight) comprising slag particles having a maximum particle size of about 30 mm, which contained about 70% by weight of slag particles having a particle size of 5 mm or less, was piled to a height of 1.5 m in a pit of width 4 m x depth 6 m, and appropriately compacted. Then the pit was tightly closed, and carbon dioxide was blown at a feed rate of 50 $Nm^3$/hr for 3 days to solidify the slag with carbon dioxide. The slag solidified with carbon dioxide was crushed by a heavy machine to obtain a bulk block of a size of about 1.0 m to 1.5 m as a block for seaweed beds.

As a comparative example, mortar was poured into a frame of a size of 1.5 m x 1.5 m x 1.5 m, and a concrete block after hardening was divided into two parts by a breaker (rock drill) to obtain a seaweed bed block having a crushed surface.

The sea bottom at a water depth of 4 m near a natural seaweed bed was selected as an experimental place for creating a seaweed bed, and 15 blocks of this example of the present invention and 20 blocks of the comparative example were immersed in a range having a diameter of about 10 m. The blocks of the comparative example were immersed with the crushed surfaces facing upward. As the time of immersion of the blocks, the time immediately before the release of spores from marine algae in natural seaweed beds was selected so as to prevent the surfaces of the blocks from being covered with sediments in the sea before the adhesion of spores of marine algae or the like.

As a result of research of the place where the blocks were immersed after the elapse of about 1 year, it was recognized that marine algae adhered and grew on all blocks. However, as a result of measurement of the amounts of the algae grown by crop estimate by unit acreage sampling, the wet weight of the algae on the blocks of the comparative example was 956 g/m$^2$, while the wet weight of the algae on the blocks of the example of the present invention was 1121 g/m$^2$. It was thus recognized that the blocks of the example of the present invention exhibit good adhesion and viability of the algae , as compared with the comparative example.

Example 2

Converter slag powder (slag subjected to metal recovery, having an iron content of 2% by weight) comprising particles having a particle size of 3 mm or less was piled to a height of 1.5 m in a pit of width 4 m x depth 6 m, and appropriately compacted. Then the pit was tightly closed, and carbon dioxide was blown at a feed rate of 50 Nm$^3$/hr for 3 days to solidify the slag with carbon dioxide. The slag solidified with carbon dioxide was crushed by a heavy machinery to obtain a bulk block of a size of about 1.0 m to 1.5 m as a block for seaweed beds.

As a comparative example, mortar was poured into a frame of a size of 1.5 m x 1.5 m x 1.5 m, and a concrete block after hardening was divided into two parts by a breaker (rock drill) to obtain a block for seaweed beds having a crushed surface.

The sea bottom at a water depth of 4 m near a natural seaweed bed was selected as an experimental place for creating a seaweed bed, and 15 blocks of this example of the present invention and 20 blocks of the comparative example were immersed in a range having a diameter of about 10 m. The blocks of the comparative example were immersed with the crushed surfaces facing upward. As the time of immersion of the blocks, the time immediate before the release of spores from marine algae in natural seaweed beds was selected so as to prevent the surfaces of the blocks from being covered with sediments in the sea before the adhesion of spores of marine algae or the like.

As a result of research of the place where the blocks were immersed after the elapse of about 1 year, it was recognized that marine algae adhered and grew on all blocks. However, as a result of measurement of the amounts of the algae grown by crop estimate by unit acreage sampling, the wet weight of the algae on the blocks of the comparative example was 579 g/m$^2$, while the wet weight of the algae on the blocks of the example of the present invention was 695 g/m$^2$. It was thus recognized that the blocks of the example of the present invention exhibit good adhesion and viability of the algae, as compared with the comparative example.

As described above, the present invention can provide a submarine immersion block which can exhibit the excellent function in growth of marine algae or the like without causing an increase in pH and oligoaerobic sea water when used as a block for seaweed beds, a block for reef construction, a fishing bank, or the like, and which permits easy adjustment of the size and density.

The submarine immersion block of the present invention using raw material slag subjected to metal removal processing has the above-described function, as well as the function to effectively suppress the occurrence of oligoaerobic sea water due to oxidation of iron and the excessive supply of iron to sea water in a sea area which requires suppression of the occurrence of oligoaerobic sea water due to oxidation of iron and the excessive supply of iron to sea water.

Particularly, in the production method of the present invention comprising solidifying slag with carbon dioxide in a state where the slag is formed in a pile or packed bed, a submarine immersion block having any desired density and size can be produced at low cost by controlling the degree of compaction of the pile of packed bed, and appropriately selecting the size of the block quarried after carbon dioxide solidification and the size of the packed layer or the like.

Some types of slag have the property that slag is powdered due to transformation and expansion of γ-dicalcium silicate produced in cooling, expansion due to hydration of free CaO, or the like. Conventionally, such powdered slag cannot be used as material with the exception that it is partially used as cement raw material; it is mostly disposed. The present invention can use such powdered slag as raw material, as well as slag (for example, dephosphorized slag, desiliconized slag, and the like) which is difficult to use as cement raw material because of the limitations of the composition thereof, causing difficulties in effective utilization. Therefore, the present invention is very advantageous for effective utilization of slag produced in the iron and steel making process.

River Immersion Block and Production Method Therefor

As a result of repeated experiment and research, the inventors found the following facts:

(1) Powder and granule, coarse grain or small lump slag, particularly such slag containing an appropriate amount of iron, is consolidated and agglomerated by using, as a binder, $CaCO_3$ or $CaCO_3$ and $MgCO_3$ produced by carbonation reaction to be used as a river immersion block, causing no increase in pH of sea water and exhibiting excellent effects on the formation of a life space for fishes and the growth of aquatic plants such as algae and the like when it is immersed or laid as a river immersion block in river water. Particularly, when the block is immersed or laid in an artificial structure such as a fish-way or the like, or an artificial river bed provided at a dam or weir of a river, it exhibits excellent effects on mobility of underwater living organisms other than fishes, and the growth of aquatic plants.

(2) On the other hand, for a river basin which requires the suppression of the occurrence of oligoaerobic river water due to oxidation of iron and the excessive supply of iron to river water, powder and granule or coarse grain slag, which is subjected to metal removal processing, is consolidated and agglomerated by using, as a binder, $CaCo_3$ or $CaCO_3$ and $MgCO_3$ produced by carbonation reaction, and is used as a river immersion block, without causing oligoaerobic river water due to oxidation of iron, the excessive supply of iron to river water, and an increase in pH of river water, as well as exhibiting an excellent effect on the growth of algae.

(3) An effective method of obtaining the above-described river immersion agglomerated block comprises piling or packing at least one slag selected from the group consisting of powder and granule slag, coarse grain slag, and small lump slag, or powdery and granule or coarse grain slag, which is subjected to metal removal processing, to form a pile or packed bed with a desired density, and then effecting carbonation in the pile or packed bed in the presence of carbon dioxide to consolidate the slag. This method is capable of producing a block with any desired density and size according to the conditions of the river bed and stream current to which the block is applied, and applications such as river beds, fish-way, and the like. The method can also easily realize a large block.

The present invention is characterized as follows:

(1) The present invention provides a river immersion block comprising, as a main raw material, slag produced in the steel manufacturing process, wherein the slag is consolidated and agglomerated by using $CaCO_3$ produced in carbonation reaction as a binder. The slag is at least one selected from the group consisting of powder and granule slag, coarse grain slag, and small lump slag. The slag may be powder and granule slag or coarse grain slag, which is subjected to metal removal treatment.

(2) The present invention provides a river immersion block comprising, as a main raw material, slag produced in the ron and steel making process, wherein the slag is consolidated and agglomerated by using $CaCO_3$ and $MgCO_3$ produced in carbonation as a binder. However, this invention includes cases in which $MgCO_3$ is present as a hydrate, hydroxide or double salt. The slag is at least one selected from the group consisting of powder and granule slag, coarse grain slag, and small lump slag. The slag may be powder and granule slag or coarse grain slag, which is subjected to metal removal treatment.

(3) The present invention provides a river immersion block comprising, as main raw materials, slag produced in the iron and steel making process and a powder and granule and/or coarse grain additive, wherein a mixture of the slag and the additive is consolidated agglomerated by using $CaCO_3$ produced in carbonation reaction as a binder. The slag is at least one selected from the group consisting of powder and granule slag, coarse grain slag, and small lump slag. The slag may be powder and granule slag or coarse grain slag, which is subjected to metal removal treatment.

(4) The present invention provides a river immersion block comprising, as main raw materials, slag produced in the iron and steel making process and a powder and granule and/or coarse grain additive, wherein a mixture of the slag and the additive is consolidated and agglomerated by using $CaCO_3$ and $MgCO_3$ produced in carbonation reaction as a binder. However, this invention includes cases in which $MgCO_3$ is present as a hydrate, hydroxide or double salt. The slag is at least one selected from the group consisting of powder and granule slag, coarse grain slag, and small lump slag. The slag may be powder and granule slag or coarse grain slag, which is subjected to metal removal treatment.

(5) A method of producing a river immersion block comprises mixing slag produced in the iron and steel making process and at least one selected from CaO, $Ca(OH)_2$, MgO, and $Mg(OH)_2$ according to demand, forming a slag pile of or packed bed in any desired space, effecting carbonation reaction of the pile or packed bed in the presence of carbon dioxide to consolidate the slag to obtain a block comprising the agglomerated slag. The slag is at least one selected from the group consisting of powder and granule slag, coarse grain slag, and small lump slag. The slag may be powder and granule slag or coarse grain slag, which is subjected to metal removal treatment.

(6) A method of producing a river immersion block comprises mixing slag produced in the iron and steel making process, a powdery and granule and/or coarse grain additive, and, at least one selected from CaO, Ca(OH)$_2$, MgO, and Mg(OH)$_2$ according to demand, forming a slag pile or a packed bed in any desired space, effecting carbonation of the pile or the packed bed in the presence of carbon dioxide to consolidate the slag and the additive to obtain a block comprising the agglomerated slag and additive. The slag is at least one selected from the group consisting of powder and granule slag, coarse grain slag, and small lump slag. The slag may be powder and granule slag or coarse grain slag, which is subjected to metal removal treatment.

The present invention provides the river immersion block comprising the slag produced in the iron and steel process as a main raw material. Although examples of the slag include blast furnace slag such as air-cooled blast furnace slag, water-granulated blast furnace slag, and the like; steel-making slag such as desiliconized slag, desulfurized slag, dephosphorized slag, decarburized slag, cast slag, and the like, which are produced in the steps of pre-processing, a converter, casting, and the like; ore reducing slag; electric furnace slag; and the like; the slag is not limited to these types of slag. A mixture of at least two types of slag may be used.

Although there are differences in some degree of metal content, the slag produced in the iron and steel making process contains a relatively large amount (generally several % by weight to about 30% by weight) of metal (iron such as granular iron or the like), and thus the metal of the slag is recovered for recycling the iron to the steel manufacturing process. In order to recover the metal, slag is crushed. Therefore, slag passed through the metal recovering step, including powdered, coarsely grained and small lump slag, is inevitably powdered, coarsely grained or made small lump slag. The particles of the slag passed through the metal recovering step generally have particle diameters on the cm order or less (for example, 5 cm or less).

The river immersion block of the present invention comprises at least one of powder and granule slag, coarse grain slag, and small lump slag as a raw material. However, the slag used in the present invention may be at least one of powder and granule slag, coarse grain slag, and small lump slag, and is not necessarily passed through the above-described metal recovering step.

When such slag is used as a base material of the river immersion block, the iron content of the slag generally need not be as low as when the slag passed through metal removal treatment is used as the base material of the block. The slag rather preferably contains an appropriate amount of iron (particularly, metallic iron such as granular iron, or metallic iron-containing material). This is because an appropriate amount iron contained in slag is eluted to river water to supply iron as nutrient salts to river water, causing effective actions on the growth of algae. Therefore, the appropriate iron content of slag is 3% by weight or more.

When the occurrence of oligoaerobic river water due to oxidation of the metal contained in slag or the excessive supply of iron to river water causes a problem according to the circumferences of a river in which the block is immersed, the slag used is subjected to metal removal processing, and then used as a raw material for the block with no metallic iron or metallic iron-containing material added.

Although there are differences in some degree of metal content , the slag produced in the iron and steel making process contains a relatively great amount of metal, and an appreciable portion of the metal contained in slag can be recovered by the above-described metal recovery processing. However, since slag components are mixed with the metal in a state where they are entwined with each other, the metal cannot be sufficiently removed by grinding in the same level as the usual metal recovering step, and thus a significant amount of metal still remains in slag after the metal recovering step. When the block obtained from slag subjected to only metal recovery is immersed in river water, the problems of causing oligoaerobic river water due to oxidation of the metal in slag or the excessive supply of iron to river water occur according to the river basin where the block is immersed. Therefore, as the block immersed in such a river basin, slag passed through the metal removing step to remove the principal metal is used as a raw material.

As described above, since slag components are mixed with the metal in a state where they are entwined with each other, it is necessary to remove the metal by metal removal (removal by magnetic separation or the like) in a state wherein the slag is a powder and granule or coarse grain slag. Therefore, the slag passed through metal removal treatment, which includes powder or coarse grain slag, is inevitably powder and granule or coarse grain slag. Generally, the particles of the slag passed through the metal removal treatment have particle diameters on the mm order or less (for example, 5 mm or less).

Therefore, for the river immersion block of the present invention which is applied to a river causing the problems of causing oligoaerobic river water and the excessive supply of iron to river water, powder and granule and/or coarse grain slag passed through the metal removal treatment is used as a raw material.

In the metal removal treatment, the metal of slag is preferably removed as much as possible except the metal inevitably remaining in the slag. Generally, the iron content (metal) of slag is preferably less than 3% by weight.

In the present invention, the block is produced by consolidating (carbon dioxide solidification) and agglomerating at least one slag selected from the group consisting of powder and granule slag, coarse grain slag, and small lump slag, or powder and granule and/ or coarse grain slag as a main raw material using $CaCO_3$ or $CaCO_3$ and $MgCO_3$ produced in carbonation as a binder. It was found that the block is a suitable material as a river immersion block such as a block for river beds, particularly a block for artificial structure and artificial river bed, such as a block for fish-way or the like.

The slag produced in the iron and steel making process generally contains an appreciable amount of CaO (generally, 20% by weight to 60% by weight). The river immersion block of the present invention is obtained by consolidating and agglomerating slag particles (additive particles and slag particles when an additive is contained) using, as a binder, $CaCO_3$ changed, by the above reaction, from CaO or $Ca(OH)_2$ (including CaO and $Ca(OH)_2$ added as occasion demands) changed from CaO, which is contained in powder and granule and/or coarse grain slag subjected to metal removal treatment.

Slag mostly contains CaO and some amount of MgO, and the river immersion block of the present invention, which comprises slag as a raw material, is obtained by consolidating and agglomerating slag particles (additive particles and slag particles when an additive is contained) using as a binder $CaCO_3$ and $MgCO_3$ changed, by the above carbonation reaction, from MgO or $Mg(OH)_2$ (including MgO and $Mg(OH)_2$ added as occasion demands) changed from MgO.

In some cases, CaO and MgO contained in the slag produced in the iron and steel making process are partially or entirely changed to $Ca(OH)_2$ and $Mg(OH)_2$ due to absorption of water or other causes with time. However, this causes no problem in the slag used in the present invention, and $Ca(OH)_2$ and $Mg(OH)_2$ are also changed to $CaCO_3$ and $MgCO_3$, respectively, by carbonation to obtain the river immersion block of the present invention.

The river immersion block of the present invention is immersed or laid in water as a block for a river bed, a block for fish-ways, or the like. The block of the present invention may be arranged in water in any desired form, and may be not only simply immersed but also fixedly laid on an appropriate structure or the like.

Particularly, the river immersion block of the present invention is preferable as block which is immersed or laid on an artificial structure or artificial river bed, such as a block for a fish-way or the like. As the block for a fish-way, the river immersion block is immersed or fixedly laid on at least the bottom of a fishway. Besides the fishway, for example, the block can be fixedly laid on any desired structure such as the upper surface (for example, a slope of an artificial structure which constitutes a part or whole of head works of a weir or the like) of an artificial structure in which water flows, an artificial river bed (for example, a river bed constructed by block pitching or block arrangement), which is fixedly constructed, or the like.

The river immersion block of the present invention may be used in any mode (shape, size, etc.), and for example, the size may be appropriately selected from the 1000 mm order or more to the several tens mm order according to application. When the block is fixedly laid on a fishway, another artificial structure, or an artificial river bed, a block-, panel-, or tile-shaped block or a shape (shaped material ) close to these shapes is preferably used in order to facilitate the work and, in some cases, permit fixed laying only by block arrangement. However, in the fish-way, the agglomerated block may be used in such a manner that a shapeless block is simply immersed to the bottom.

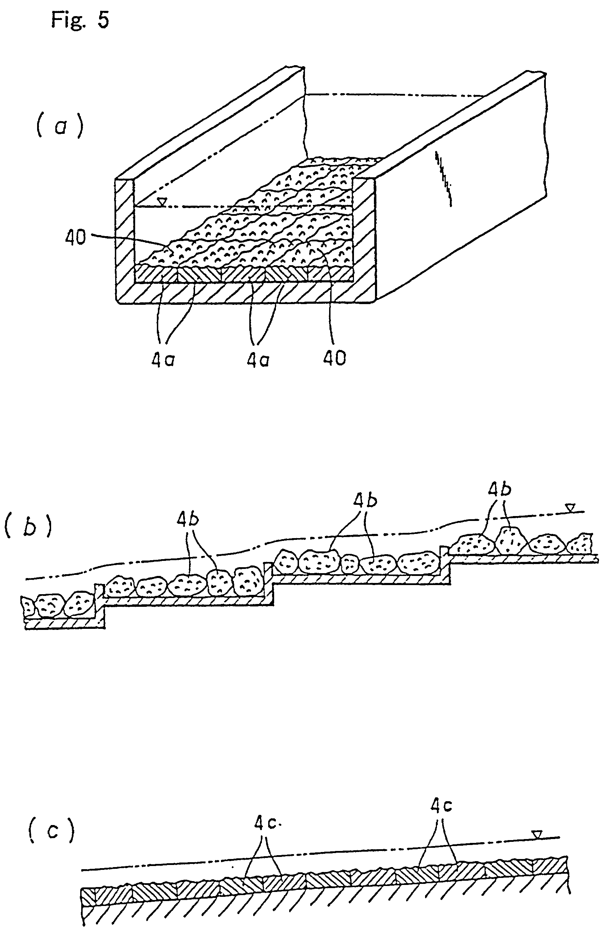

Figs. 5(a) to (c) show examples of a structure in which the block of the present invention is laid or immersed on an artificial structure such as a fish-way or the like, or an artificial river bed. Fig. 5(a) shows an example in which block- or panel-shaped blocks 4a are fixedly laid on the bottom of a slope type fish-way. In order to fix these blocks 4a, mortar may be used according to demand. In this example, the bottom of the fish-way comprises the crushed surfaces 40 of the blocks (the crushed or fracture surfaces). These crushed surfaces 40 are crushed or fracture surfaces formed by crushing or fracturing the stone block which is obtained by carbon dioxide solidification, and thus have a higher degree of irregularity than the surfaces obtained only by carbon dioxide solidification, thereby causing the effect of facilitating the movement of underwater living organisms. Fig. 5(b) shows an example in which block blocks 4b are immersed in an unfixed manner to the bottom (each step) of a step ladder. Fig. 5(c) shows an example in which block- or panel-shaped blocks 4c are fixedly laid on an artificial structure other than a fish-way, or an artificial river bed. Examples of such artificial structures other than a fish-way to which the structure can be applied include a slope which constitutes the head works of a weir, and the like.

The river immersion block of the present invention has the advantages below as a block immersed or laid on a river bed or the like.

(1) Since CaO (or $Ca(OH)_2$ produced from CaO) contained in slag is mostly changed to $CaCO_3$, the adhesion and growth of algae can be prevented from being delayed due to an increase in pH of river water, or a pH increase in the periphery of the block due to elution of CaO can be prevented. Generally, a natural stone (limestone) has a pH of about 9.3; concrete has a pH of about 12 to 12.5. However, the above-described neutralization reaction in production permits the river immersion block of the present invention to have a pH of about 10 close to that of a natural stone.

(2) The block obtained by carbon dioxide solidification of powder and granule slag and/or coarse grain slag entirely (the surface and inside) has porous properties, making easy adhesion of aquatic plants such as algae to the surface of the block. In addition, since the inside of the block is also porous, the components contained in the block, which are effective for the growth of algae, are readily eluted to river water, thereby causing good growth of algae.

(3) When bulk slag is used as the river immersion block without any processing, the size thereof is generally limited (generally, about 800 mm at maximum) due to restrictions of the method of cooling molten slag and conditions therefor, and thus it is difficult to obtain large agglomerated blocks having a uniform size. While the stone obtained by carbon dioxide solidification of powder and granule slag and/or coarse grain slag can be controlled to any desired size by selecting the form at the time of carbon dioxide solidification or the shape quarried after carbon dioxide solidification, thereby easily obtaining a stone of any desired size, such as a large block for arrangement in a river, a medium bulk stone for immersion or laying on a river bed, a small bulk stone (a rag stone), or the like.

(4) The block used for rivers preferably has an optimum density (specific gravity) according to the conditions of a river bed, the speed of a stream current, etc. From this viewpoint, the block obtained by carbon dioxide solidification of powder and granule slag and/or coarse grain slag can be controlled to any desired density by appropriately controlling the bulk density (degree of consolidation) at the time of carbon dioxide solidification.

(5) In the river immersion block obtained from powder and granule slag and/or coarse grain slag subjected to metal removal processing, the main metal is removed, and thus the problem of causing oligoaerobic river water due to oxidation of the metal or the excessive supply of iron to river water due to elution of the metal does not occur when the block is applied to a river basin having the problem of causing oligoaerobic river water or the excessive supply of iron to river water. The river immersion block obtained from such slag from which the metal is removed contains components, which contribute to carbon dioxide solidification of slag, in amounts relatively increased corresponding to the removal of the metal. This is advantageous for securing the strength of the block.

(6) The block of the present invention is ordinarily obtained by cutting the consolidated pile or packed bed, and thus has a rock-like rugged form. Therefore, in immersing or laying the block on a river bed, a large space is easily produced between the blocks or the block and the river bed, as compared with round blocks generally seen in rivers, or natural blocks having shapes like the round blocks, thereby easily forming life and resting spaces useful for underwater living organisms.

As described above, of applications to rivers, the river immersion block of the present invention is particularly preferably used as a block for an artificial structure such as a fish-way or the like, and an artificial river bed (hereafter, description will be made of a block for a fish-way as an example) in which water flows. When the block is used in such application, the block has the above advantages as well as the following advantages:

(7) Since the block obtained by carbon dioxide solidification of powder and granule and/or coarse grain slag has a porous surface, and thus has countless irregularities, when the block is immersed or laid on the bottom of a fish-way, underwater living organisms (for example, crustacea, underwater insects, and the like) which crawl on the river bed (surface projections of a block, and aquatic plants) while scratching it with their claws can easily move in the fish-way. Particularly, since the block of the present invention has a porous and irregular surface, and pH in the same level of natural blocks, and the effective components are also readily eluted, as described above, aquatic plants such as algae or the like readily adhere and grow on the surface. Such adhesion and growth of aquatic plants makes easy the movement of the underwater living organisms in the fish-way.

(8) When the stone is used for the fish-way, the agglomerated blocks may be simply immersed in the fish-way. However, in order to prevent a flow of the blocks due to the stream current, the formed stones as the block-shape or the panel-shape are preferably fixedly laid on the bottom of the fish-way. From this viewpoint, the block obtained by carbon dioxide solidification of powder and granule and/or coarse grain slag can be formed in any desired shape during production, and the use of such a block facilitates the work of fixedly laying the blocks on the bottom of the fish-way, and permits secure laying.

(9) Since the work can be carried out at low cost as compared with conventional foamed concrete, and the block has lower pH than concrete, the block is also preferable for underwater living organisms which move along the bottom of the fish-way.

The river immersion block of the present invention is obtained by tightly consolidating slag having small particle diameters using, as a binder, $CaCO_3$ or $CaCO_3$ and $MgCO_3$ produced by carbonation reaction, and thus has sufficient strength, thereby causing neither crack nor fracture even when a shock is applied to the block in transport or immersion or laying in a river, or allowed to stand in water for a long time.

The river immersion block of the present invention may contain powder and granule slag and/or coarse grain slag, as well as various additives (powder and granule or coarse grain additives) in order to achieve a preferable composition according to the conditions of a place to which the block is applied, etc. Examples of such additives include powder and granule or coarse grain materials (soluble silica and soluble silica-containing materials) serving as soluble silica sources, powder and granule or coarse grain materials (iron oxide, and iron oxide-containing materials) serving as iron oxide sources, and the like.

The soluble silica and iron oxide contained in the river immersion block effectively act on the growth of aquatic plants such as algae due to elution to water.

Examples of powder and granule or coarse grain materials serving as soluble silica sources include powder and granule or coarse grain soluble silica and/or soluble silica-containing materials. As the soluble silica-containing materials, fly ash produced by coal combustion in a thermal power plant or the like, clinker ash, and the like can be used. The fly ash contains about 45 to 75% by weight of soluble silica, and the clinker ash contains about 50 to 65% by weight of soluble silica.

Since water-granulated blast furnace slag also contains a relatively large amount of soluble silica, the slag used is partially or entirely replaced by water-granulated blast furnace slag, for example, a mixture of steel-making slag and water-granulated blast furnace slag is used, to obtain the same effect as the case in which an additive serving as a soluble silica source is added.

Powder and granule or coarse grain materials serving as iron oxide sources include powder and granule or coarse grain iron oxide and/or ion oxide-containing materials, and the like. Particularly, as powder and granule or coarse grain materials easily obtained at low cost, iron-containing dust and mill scales produced in the steel manufacturing process can be used. General iron-containing dust is steel making dust which contains about 75% of iron oxide in terms of Fe. The mill scales also contain about 70% of iron oxide in terms of Fe.

When a small block having a relatively low specific gravity is desired to be used, it is effective to use water-granulated slag having a lower specific gravity than other slag as at least a portion of the main raw material.

Since the river immersion block of the present invention has relatively porous properties, the above-described effects can be obtained. Although the void ratio of the block is not limited, the void ratio is preferably about 10 to 70%.

The method of producing the river immersion block of the present invention will be described below.

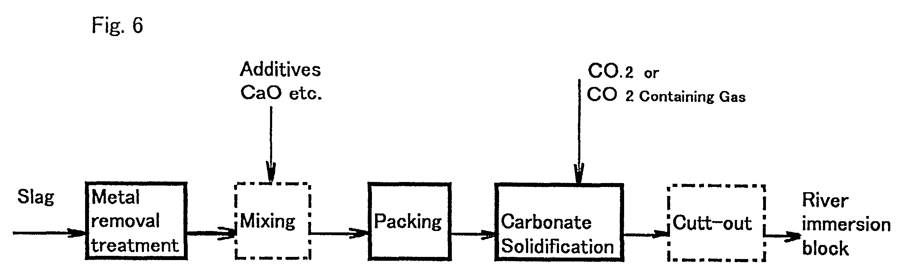

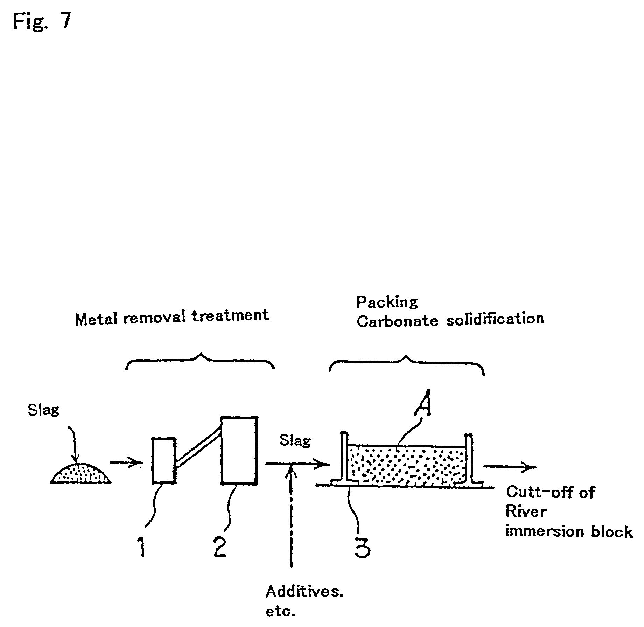

Fig. 6 shows an example of the production flow of the method of the invention, and Fig. 7 shows an example of the production process. First, the main metal (granular iron) is removed from the slag produced in the iron and steel making process by metal removal teratment. Since the slag components are generally mixed with the metal in slag in a state where they are closely entwined with each other, the slag must be made powder and granule or coarse grain slag for metal removal treatment. Therefore, before metal removal teratment, slag is crushed to particle diameters (for example, 5 mm or less) on the mm order or less by a crusher or the like. However, the slag preferably has a particle diameter which permits metal removal treatment. Therefore, even if slag comprises relatively coarse particles due to the properties thereof, when the metal can be removed from the slag, the slag is preferably crushed to a particle size which permits metal removal.

Some types of slag are conveyed in a state where they are naturally powdered or grained to a particle diameter which permits metal removal. In some cases, such slag need not be subjected to the above-described crushing processing.

Although metal removal teratment is generally carried out by magnetic separation (the method of removing granular iron from slag with a magnet) using a magnetic classifier or the like, the removal method is not limited to this. For example, it is possible to use gravity separation which employs differences in specific gravity between the metal component and the slag components, such as wind separation or the like.

In the metal removal treatment, the fundamental metal component of slag is removed. In Fig. 7, reference numeral 1 denotes a crusher, and reference numeral 2 denotes a magnetic classifier.

Then, an additive is added to powder and granule and/or coarse grain slag subjected to the metal removal treatment according to demand. Further, when slag is short of CaO or MgO necessary for carbonation , at least one selected from $CaO$, $Ca(OH)_2$, $MgO$, and $Mg(OH)_2$ is added and mixed with slag according to demand. Examples of such additives include powder and granules or coarse grains (soluble silica and soluble silica-containing material) serving as soluble silica sources, powder and granules or coarse grains (iron oxide, and iron oxide-containing material) serving as iron oxide sources, CaO, and the like. Typical examples of these materials are as described above.

Examples of the method of mixing slag and additive raw materials such as additives, CaO, and the like, include a method in which slag discharged from a metal removing equipment is mixed with additive raw materials in a hopper, a method in which additive raw materials are added to and mixed with slag subjected to metal removal teratment in the metal removing equipment, a mixing method using a heavy machinery such as shovel or the like, and the like. Any of these methods can be used.

The slag in which the additives are added and mixed according to demand is piled or packed in any desired space for carbon dioxide solidification.

Although the slag may be piled in open air, the pile of the slag is preferably covered with a sheet or the like so that the blown carbon dioxide gas sufficiently flows over the entire pile, and the slag is avoided from scattering or flowing due to rain water or the like.

In order to pile or pack the slag, for example, a three-side pit surround by walls, a four-side frame or container surrounded by walls, or the like can be used. Of these means, when slag is piled or packed in a pit, like in open-air piling, a pile or packed bed is preferably covered with a sheet or the like. When a frame or container is used, it is preferable to cover the packed bed of slag with a sheet, or provide a cover. Fig. 7 shows a state in which packed bed A is formed in a frame 3.

The amount of the slag piled or packed is not limited, and for example, the amount of piling or packing may be several tons to hundreds tons, or an amount corresponding to one block to tens stones. The amount is any desired value. However, even when a large amount of slag is piled or packed, the pile or packed bed is crushed by a heavy machinery or the like after carbon dioxide solidification to make it easy to quarry an agglomerated block. In addition, such a bulk stone quarried by crushing has the advantage that it has an uneven fracture surface useful for adhesion of algae. Therefore, from the viewpoints of productivity and the function as a stone for river beds, the amount of the slag piled or packed is preferably large to some extent, for example, the scale of 10 t or more.

In addition, the bulk density (consolidation degree) of the pile or packed bed of slag is preferably adjusted according to the density of a block to be produced. Namely, the density of the river immersion block is preferably adjusted according to the conditions of the river bed, stream currents, etc. Since the adhesion of algae, the degree of growth thereof, and the property of elution of effective components from the block depend upon the porosity (void ratio) of the block, in some cases, the porosity of the block is preferably adjusted according to the conditions of a river to which the block is applied.

The density of the block produced by the method of the present invention depends upon the bulk density (consolidation degree) of the pile or packed bed of slag, and thus the density of the block can easily be adjusted by controlling the degree of compaction of the pile or packed bed of slag to adjust the bulk density thereof according to demand.

Although the degree of compaction of the slag pile or packed bed is any desired degree, compaction is made so that the ratio of bulk specific gravity/absolute specific gravity is in the range of 0.3 to 0.9, i.e., the void ratio of the pile or packed bed is about 70 to 10%.

The slag pile or packed bed can be compacted by a method in which the pile or packed bed is compacted by using a heavy machinery from above, a method in which the pile or packed bed is compacted by applying vibrations thereto, or the like. In this step, the degree of compaction is adjusted to control the bulk density of the pile or packed bed. Particularly, in producing a block having a low density, the slag piled or packed can be subjected to carbon dioxide solidification without compaction.

As a typical example of the compaction method, for example, when the pile or packed bed in the above-described pit, frame, or container is compacted, a line showing a target volume is indicated on the inside of the pit, frame, or container so that after slag having a known weight is charged, compaction is made until the top of the pile of packed bed is at the height of the line.

After the bulk specific gravity of the slag pile or packed bed is completely adjusted as described above, carbonation is produced in the pile or packed bed in the presence of carbon dioxide to solidify the slag with carbon dioxide. Specifically, carbon dioxide or carbon dioxide-containing gas is blown into the slag pile or packed bed, or the slag pile or packed bed is placed in an atmosphere of carbon dioxide or carbon dioxide-containing gas to solidify the slag with carbon dioxide.

Although the method of blowing carbon dioxide or carbon dioxide-containing gas into the slag pile or packed bed is not limited, it is most effective that gas blowing means is provided at the bottom of the slag pile or packed bed so as to blow the gas through the gas blowing means. Specifically, a gas supply pipe or hose is arranged at the bottom of the slag pile or packed bed (the floor when the pit, frame or container is used) with an appropriate arrangement density so that carbon dioxide or carbon dioxide-containing gas can be blown from gas nozzles provided in the pipe or hose with an appropriate pitch (for example, 300 mm to 400 mm pitch).

As the method of placing the slag pile or packed bed in an atmosphere of carbon dioxide or carbon dioxide-containing gas, a method can be employed, in which the slag pile or packed bed is placed in an airtight space (including a container or the like) into which carbon dioxide or carbon dioxide-containing gas is blown in any desired form.

Although preferable examples of the carbon dioxide-containing gas include lime burning plant exhaust gases (generally, $CO_2$ about 25%), heating furnace exhaust gases (generally, $CO_2$ about 6.5%), and the like, the carbon dioxide-containing gas is not limited to these gases. When the carbon dioxide concentration of the carbon dioxide-containing gas is too low, the problem of decreasing the processing efficiency occurs, without any other problem. Therefore, although the carbon dioxide concentration is not limited, the carbon dioxide concentration is preferably 3% or more for efficient processing.

Also the amount of the carbon dioxide or carbon dioxide-containing gas blown is not limited, and the gas may be blown so that the slag pile or packed bed does not flow. However, as a standard, about 0.004 to 0.5 $m^3$/min·t is preferably securely blown. Although the gas blowing time (carbonation time) is also not limited, as a standard, the gas is preferably blown to the time when the amount of carbon dioxide ($CO_2$) blown is 3% or more of the weigh of slag, i.e., until the amount of carbon dioxide ($CO_2$) supplied is 15 $m^3$ or more per ton of material.

Although the carbon dioxide or carbon dioxide-containing gas blown into the slag pile or packed bed may be at room temperature, the gas temperature higher than room temperature is advantageous because reactivity is increased accordingly. However, with excessively high gas temperatures, $CaCO_3$ is decomposed into $CaO$ and $CO_2$, and $MgCO_3$ is decomposed into $MgO$ and $CO_2$, and in use of high temperature gas, it is thus necessary to use a gas of temperature which does not cause such decomposition.

In order to solidify slag with carbon dioxide using reaction of CaO, MgO and carbon dioxide, water is required. The moisture content of slag immediately before carbonation is started is preferably in the range of about 3 to 10%. This is because dissolution of CaO, MgO and carbon dioxide in water accelerates carbonation reaction. When the moisture content of slag is excessively low, it is preferable that water is added to slag in the mixing step shown in Fig. 6 to increase the moisture content of slag. Also, carbon dioxide or carbon dioxide-containing gas is blown into water to be saturated with $H_2O$, and then blown into the pile or packed bed so that drying of the slag can be prevented, thereby accelerating carbonation reaction. Alternatively, the moisture of the mixture may be adjusted to a moisture value so that the bulk material after carbonation has maximum compression strength. The moisture value is determined as follows:

(a) Any desired amount of water larger than the water absorption of the raw material slag particles is added to 100 parts by weight of raw material slag to prepare raw material slag at three levels or more. The water absorption is the water absorption of fine aggregate or coarse aggregate defined in JIS A1109 or A1110.
(b) The raw material slag at each of the levels is packed in a frame so that the dry porosity is constant to form a packed bed.
(c) A predetermined amount of humidified carbon dioxide of 10 to 40°C is blown into the packed bed, and then carbonation curing is performed for a predetermined time to solidify the raw material slag.
(d) The compression strength of the solidified slag is measured to determine the maximum compressive strength. A water content value corresponding to the maximum value is considered as the optimum water content.

As described above, carbon dioxide or carbon dioxide-containing gas is supplied to the slag pile or packed bed so that $CaCO_3$ and $MgCO_3$ are produced by reaction of $CaO$ (or $Ca(OH)_2$) and $MgO$ (or $Mg(OH)_2$) and carbon dioxide. As a result, the slag particles (slag particles and additive particles when additives are mixed) are consolidated by $CaCO_3$ or $CaCO_3$ and $MgCO_3$ serving as a binder.

After the completion of carbon dioxide solidification, the pile or packed bed is crushed to an appropriate size by a heavy machine or the like according to demand to quarry a river immersion agglomerated block. Therefore, a block of any desired size can be obtained according to the size quarried. Generally, a agglomerated block is quarried in a size of 80 to 1500 mm. In crushing to quarry a block, an uneven crushed surface to which aquatic plants readily adhere is produced in the block.

In the method of the present invention, the volume of the packed bed is sufficiently decreased so that a block can be used as a block without quarrying, or by dividing into two parts. For example, when a block- or panel-shaped block is obtained, as described above, the block block obtained by carbon dioxide solidification is crushed or divided into two parts by fracture to obtain two block- or panel-shaped blocks having the crushed upper surfaces (crushed or fracture surfaces).

The production method of the present invention has the following advantages:

(1) Since carbon dioxide solidification is performed in a state wherein slag is formed in the pile or packed bed, the bulk specific gravity is controlled by controlling the compaction degree of the pile or packed bed so that the density of the river immersion block can simply be controlled. As described above, the density and porosity of the river immersion block are preferably appropriately adjusted according to the conditions of the river bottom and stream currents. Such arbitrary and simple adjustment is significantly advantageous as the method of producing the river immersion block. Although the technique of solidifying granulated pellets or the like is conventionally known, this granulation technique is difficult to widely adjust the density of a material to be processed.
(2) In the method of the present invention, slag is solidified with carbon dioxide in a state where the slag is formed in a pile or packed bed, and after carbon dioxide solidification, the pile or packed bed is crushed to an appropriate size to quarry a agglomerated block of a desired size, or the packed bed is used as a bulk block as it is. Therefore, the size of the quarried block and the size of the packed bed are appropriately selected to obtain the block of any desired size (for example, 80 to 1500 mm), easily obtaining a large block. In the conventional technique of solidifying the granulated pellets or the like with carbon dioxide, the upper limit of the size of the bulk product is about 30 to 50 mm at maximum, and lumps of small size are also inevitably produced due to variations in size. Therefore, since a large stone block can be obtained, the method of the present invention is advantageous as the method of producing a river immersion block.
(3) When the block is fixedly laid on an artificial structure such as a fish-way or the like, or an artificial river bed, the block used preferably has a block or panel shape. However, in the method of the present invention, a block having such a shape can easily be obtained by appropriately selecting the size and shape of the packed bed.

(4) In the method of crushing the slag pile or packed bed by a heavy machinery or the like to quarry a agglomerated block after carbon dioxide solidification, a agglomerated block having an irregular surface (crushed surface) to which marine algae easily adhere can be obtained. In addition, for the block or panel-shaped block described above in (3), the block stone obtained by carbon dioxide solidification can be crushed or divided into two parts by fracture to obtain a block- or panel-shaped stone having the crushed upper surface.

Example 3

Converter slag powder having a particle size of 3 mm or less was piled to a height of 1.5 m in a pit of width 4 m x depth 6 m, and appropriately compacted. Then the pit was tightly closed, and carbon dioxide was blown at a feed rate of 50 $Nm^3$/hr for 3 days to solidify the slag with carbon dioxide. The slag solidified with carbon dioxide was crushed by a heavy -weight machinery to obtain a bulk stone of a size of about 30 to 250 mm having strength sufficient for a river immersion block.

Example 4

100% by weight of de-phosphorized slag (CaO: 54.9%, MgO: 2.3%) having a particle size of 6 mm or less was used as a raw material to produce blocks for a fish-way by the following two methods (1) and (2) :

(1) The slag was packed in a porous frame of a size of 50 cm x 50 cm x 15 cm, and then compacted, and 60 frames were set in a pit at intervals to form spaces between the frames. Then the pit was tightly closed, and carbon dioxide was blown at a feed rate of 70 $Nm^3$/hr for 5 days to solidify the slag with carbon dioxide. Then the frames were removed to obtain the stones as block-shape for fish-ways.

(2) The slag was packed in a porous frame of a size of 100 cm x 100 cm x 50 cm. During packing, a polyethylene partition (10 cm x 100 cm x 2 mm, an opening: 85 cm x 85 cm) having a central opening was inserted at the center of the width of 100 cm of the frame. After the slag powder was packed, the whole frame was compacted. 18 frames were set in a pit at intervals to form spaces between the frames. Then the pit was tightly closed, and carbon dioxide was blown at a feed rate of 70 $Nm^3$/hr for 5 days to solidify the slag with carbon dioxide. Then the frames were removed, and the resultant block stone was broken into two parts at the center, where the partition was inserted, to obtain block stones for fish-ways which had crushed upper surfaces (fracture surfaces).

The block stones for fish-ways obtained by each of the above methods (1) and (2) were laid on the bottom of a fish-way comprising a concrete base portion in the manner shown in Fig. 4(a). The fish-way blocks obtained by method (2) were laid so that the crushed surfaces formed the bottom of the fish-way. Unlike a smooth bottom of concrete (concrete blocks or concrete works), the fish-way obtained had the bottom having a rough porous surface with irregularities for making easy movement of crustacea and the like. Particularly, the fish-way using the blocks obtained by method (2) had the bottom having a significantly uneven surface.

Since the block of the present invention had substantially the same pH as natural stones (limestone) due to neutralization in production, unlike a concrete fish-way, the stone did not show the phenomenon that the surface pH is increased by the components eluted at the start of use after construction, thereby causing no delay of the adhesion of algae. In addition, since the bottom of the fish-way comprising the block of the present invention had a porous and rough surface with irregularities, adhesion and growth of algae were observed on the bottom of the fish-way within a relatively short time.

As described above, the present invention can provide a river immersion block which can exhibit the excellent function in the formation of life spaces for fishes or the like, and in the growth of aquatic plants such as algae and the like without causing an increase in pH and oligoaerobic river water when used as a riverbed block or the like in rivers. Particularly, when the block is immersed or laid on an artificial structure such as a fish-way or the like, or an artificial river bed, which is provided in a dam or weir of a river, an excellent function can be exhibited in movability of underwater living organisms other than fishes and in growth of aquatic plants. Furthermore, the size and density can also be easily adjusted.

Particularly, in the production method of the present invention comprising solidifying slag with carbon dioxide in a state where the slag is formed in a pile or packed bed, a river immersion block having any desired density and size can be produced at low cost by appropriately controlling the degree of compaction of the pile of packed bed, and selecting the size of the block quarried after carbon dioxide solidification and the size of the packed layer or the like. Particularly, repair of the river bed requires a significant amount of concrete material. However, the present invention enables preparation of blocks as immersion blocks as lower cost than the use of natural stones or concrete materials, thereby decreasing the cost of the work of repairing the river bed or the like.

Some types of slag have the property that slag is powdered due to transformation and expansion of γ-dicalcium silicate produced in cooling, expansion due to hydration of free CaO, or the like. Although, conventionally, such powdered slag cannot be easily used as material, the present invention can use such powdered slag as raw material, and is thus very advantageous for effective utilization of slag produced in the iron and steel making process.

Method of Creating Seaweed bed

The inventors conceived that in consideration of the proliferation force and function of marine algae in an existing seaweed bed, the existing seaweed bed itself is used for adhering and growing seedlings of marine algae on a basement, i.e., a material serving as the basement for creating a seaweed bed is temporarily placed in the existing seaweed bed to naturally adhere and grow seedlings of marine algae on the surface of the material, the material is used as the basement for creating a seaweed bed. As a result of repeated experiment and research on based on this idea, it was found that when a material such as a block or the like is placed in the existing seaweed bed, marine algae adhere and grow on the surface of the material within a relatively short time, and that when the material with the marine algae grown thereon is moved as a seed material to a place for creating a seaweed bed, and when new materials (material with no marine algae grown thereon) are arranged around the seed material, marine algae on the seed material proliferate to the peripheral materials within a relatively short time to form a community unit of marine algae which forms a seaweed bed.

As a result of research of preferred quality and properties of the material serving as the base for creating a seaweed bed, which includes the above-described seed material, it was found that although quality and properties of the material are basically not limited as long as the material is a heavy-weight material which can stay at the sea bottom without being flowed by the ocean currents. However, it is preferable to use a material having surface properties which make easy the adhesion of spores and seeds of marine algae as much as possible, i.e., use a material having surface irregularities and projections. Particularly, an artificial block obtained by a specified method of consolidating slag produced in the steel manufacturing process is most preferable as the material, and exhibits excellent effects in the growth of marine algae.

The present invention is characterized as follows:

A method of creating or improving a seaweed bed comprises temporarily placing a heavy-weight material, and then immersing the material in an existing seaweed bed to adhere and grow marine algae on the surface of the material, recovering the material and moving it as a seed material to a place where a seaweed bed is created or marine algae are grown, arranging another material to which marine algae are adhered around the seed material to grow marine algae on the seed material to the other material.

As the material, the artificial block below is preferably used.

(a) An artificial block comprising as a main raw material slag produced in the steel manufacturing process, wherein the slag is consolidated and agglomerated by using $CaCO_3$ produced in carbonation reaction as a binder. The slag is at least one selected from the group consisting of powder and granule slag, coarse grain slag, and small lump slag. The slag may be powder and granule slag or coarse grain slag, which is subjected metal removal processing.

(b) An artificial block comprising, as a main raw material, slag produced in the steel manufacturing process, wherein the slag is consolidated and agglomerated by using $CaCO_3$ and $MgCO_3$ produced in carbonation reaction as a binder. However, this invention includes cases in which $MgCO_3$ is present as a hydrate, hydroxide or double salt. The slag is at least one selected from the group consisting of powder and granule slag, coarse grain slag, and small block slag. The slag may be powder and granule slag or coarse grain slag, which is subjected to metal removal processing.

(c) An artificial block comprising, as main raw materials, slag produced in the steel manufacturing process and a powder and granule and/or coarse grain additive, wherein a mixture of the slag and the additive is consolidated and agglomerated by using $CaCO_3$ produced in carbonation reaction as a binder. The slag is at least one selected from the group consisting of powder and granule slag, coarse grain slag, and small block slag. The slag may be powder and granule slag or coarse grain slag, which is subjected to metal removal processing.

(d) An artificial block comprising, as main raw materials, slag produced in the steel manufacturing process and a powder and granule and/or coarse grain additive, wherein a mixture of the slag and the additive is consolidated and agglomerated by using $CaCO_3$ and $MgCO_3$ produced in carbonation reaction as a binder. However, this invention includes cases in which $MgCO_3$ is present as a hydrate, hydroxide or double salt. The slag is at least one selected from the group consisting of powder and granule slag, coarse grain slag, and small block slag. The slag may be powder and granule slag or coarse grain slag, which is subjected to metal removal processing.

Besides creation of a seaweed bed in a place where no seaweed bed naturally occurs, or seaweed beds disappear, the method of the present invention can also be applied to improvement (growth of a seaweed bed) of a place where a seaweed bed is being degenerated.

The method of creating (improving) a seaweed bed of the present invention will be described in detail below.

In the present invention, first, a material serving as a seed material is temporarily placed in an existing seaweed bed (preferably, a natural seaweed bed). The existing seaweed bed (particularly, a natural seaweed bed) is in an environment in which marine algae readily proliferate (condition of light, water quality, ocean currents, or the like, which controls the growth of marine algae), as compared with places no seaweed bed naturally occurs, and in a place where spores (swarm spores) released from marine algae are present at a highest density. Therefore, the existing seaweed bed is a place most suitable for natural adhesion and growth of marine algae on the surface of the material.

The quality and form of the material immersed in the seaweed bed as described above are not limited as long as the material is a heavy weight which permits staying at the sea bottom without flowing by the ocean currents or the like. Examples of such material include natural stones, artificial block (including bulk slag, concrete blocks, and the like), metallic material ( for example, steel materials and castings), plastic materials, composite materials thereof. Any heavy-weight material can be used as long as the specific gravity exceeds 1. The form of the material is also not limited, and appropriate forms such as a lump, an elongated form, a block, a plate, a material comprising a plurality of lumps put in a basket or net, and the like can be used.

The material having surface irregularities or projections is preferred because spores and seeds of marine algae easily adhere thereto, and young sufficiently takes root. With the block material, the irregular surface most preferably constitutes a crushed surface when the material is crushed. Since the crushed surface of a block has countless irregularities including small and large ones, it is preferable for adhesion of spores and seeds of marine algae, and viability of young.

A more preferable artificial block will be described later.

For the material other than the material comprising a plurality of lumps put in a basket or net, in order to facilitate recovery after the material is temporarily immersed in a seaweed bed, the material is preferably covered with a pulling up net, or provided with pulling up means (wire rope or the like).

As the time when the material is temporarily immersed in the seaweed bed, the time when spore and seeds of marine algae in the seaweed are actively released is preferably selected. Generally, marine algae adhere and grow on the surface of the material temporarily immersed in the seaweed bed after the elapse of about several months to one year; in the case of rapid growth, spores and seeds grow to adults or a state close thereto. The exiting seaweed bed (particularly, a natural seaweed bed) is a place exhibiting a highest degree of proliferation of marine algae on the surface of the material from the viewpoints of environments and the dense presence of spores and seeds of marine algae, thereby permitting rootage of marine algae grown on the surface of the material within a relatively short time.

In the step where marine algae is adhered and grown on the surface of the material, the material is pulled up from the seaweed bed and recovered. The material is conveyed to a place for creating a seaweed bed (for improving a seaweed bed) with the living marine algae grown on the surface thereof, and again immersed as the seed material, and a new material (i.e., another material for adhering marine algae) is immersed around the seed material. At this time, for example, the seed material is placed to the degree of 1-2 pieces of various materials per approximately 10 $m^2$, and the new materials are immersed around the seed materials at a relatively high density. Alternatively, a basement is constructed by piling up new materials so that the seed material is placed therein or built therein. This case is included in the forms of immersion of new materials around the seed materials in the method of the present invention.

The place for creating a seaweed bed is generally at the sea bottom having a water depth of 20 m or less, and the creating work can be carried out by, for example, immersing the new materials transported by a carrier ship and having no algae grown thereon to the sea bottom to construct a basement for a seaweed, and then lowering the seed materials in the basement.

The quality and properties of the new materials to be immersed are the same as the above-described seed materials. However, the new materials having different quality and properties from the seed materials may be used.

This method of creating a seaweed bed is capable of forming a community unit of marine algae which causes the spores and seeds released from the marine algae on the seed materials to adhere and grow on the peripheral materials, causing adhesion and growth of marine algae on the peripheral materials within a relatively short time to form a seaweed. Therefore, the materials to which marine algae are adhered are immersed over the entire place for creating a seaweed bed, and the seed materials are immersed so as to be dotted in the materials, thereby relatively simply creating a seaweed bed on a large scale within a relatively shot time.

The method of the present invention can be said as a seaweed bed creating method having the advantages of conventional methods and further advantages. Namely, the method of the present invention comprises adhering and growing marine algae on the seed materials for creating a seaweed bed by employing the proliferation actin of marine algae in an existing seaweed bed. Therefore, like the conventional method of planting seedlings of marine algae in materials, the method of the present invention is capable of securely rooting marine algae on the materials, and thus securely proliferating marine algae to create a seaweed bed within a relatively short time, as compared with a maintenance-free seaweed bed creating method. The method also has the advantage that a seaweed bed creating place can be widely selected.

In the method of the present invention, since marine algae are adhered and grown on the materials in a seaweed bed which is a place most suitable for sprouting and growth of marine algae from the environmental viewpoint, the marine algae grown on the surfaces of the materials have good growability and rootage, and the high probability of living and growth of marine algae, as compared with the conventional method of planting seedlings of marine algae in materials in a seaweed bed creating place. The method of the present invention further has the advantage that unlike the conventional method, substantially no growth control is required after planting.

On the other hand, the method of the present invention is different from the conventional maintenance-free seaweed bed creating method in that the seed materials are temporarily immersed in an existing seaweed bed for a predetermined time, recovered, and then moved to a seaweed bed creating place. There is substantially no need for other artificial works and growth control of marine algae. Therefore, the method of the present invention can be said to have simplicity and low cost which are close to the maintenance-free seaweed bed creating method.

Preferred materials used in the method of the present invention will be described below.

A preferable material as the material (seed material and material for the seaweed bed creating basement) used in the method of the present invention is an artificial block comprising, as a main raw material, slag produced in the steel manufacturing process, and obtained by consolidating and agglomerating the slag using as a binder $CaCO_3$ or $CaCO_3$ and $MgCO_3$ produced in carbonation. It was found that such a block stone for seaweed beds exhibits excellent effects on the growth of marine algae without causing oligoaerobic sea water and an increase in pH.

Such a block-shaped artificial block can easily be produced by the method in which powder and granule or coarse grain slag is piled or packed with a desired density, and then consolidated by carbonation reaction of the pile or packed bed in the presence of carbon dioxide. The block produced by this method can be controlled to desired density and size according to the conditions of the sea bottom and ocean currents to which the block is applied, and a large block stone can easily be realized.

Specifically, the artificial stone has the following advantages:

Since the main metal (granular iron) is removed, no oligoaerobic sea water occurs due to oxidation of the metal.

Since CaO (or $Ca(OH)_2$ produced from CaO)

contained in slag is mostly changed to $CaCO_3$, it is possible to prevent an increase in pH of sea water.

The block obtained by carbon dioxide solidification of powder and granule slag and/or coarse grain slag entirely (the surface and inside) has porous properties, making easy adhesion of marine algae to the surface of the block. In addition, since the inside of the block is also porous, the components (for example, soluble silica and iron oxide components, which will be described below) contained in the block, which are effective for the growth of marine algae, are readily eluted to sea water. Therefore, the growth of marine algae can effectively be promoted, as compared with cases in which bulk slag is used as a seaweed bed block without any processing, and concrete products comprising a slag aggregate.

In the method of the present invention, it is necessary to effectively accelerate the adhesion and growth of marine algae on the material temporarily immersed in an existing seaweed bed, and proliferation and growth of marine algae to materials arranged around the seed materials in a seaweed bed creating place. Particularly, it is necessary to effectively accelerate the growth of young of marine algae on the surfaces of the materials. From this viewpoint, the effective components eluted into water from the seaweed bed block immersed nearer marine algae more effectively act, and are particularly effective for the growth of young of marine algae, thereby effectively accelerating the growth of young of marine algae and further improving the effect of the method of the present invention.

When agglomerated slag is used as a seaweed bed block without any processing, the size thereof is generally limited (generally, about 800 mm at maximum) due to restrictions of the method of cooling molten slag and conditions therefor, and thus it is difficult to obtain large agglomerated blocks having a uniform size. While the block obtained by carbon dioxide solidification of powder and granule slag and/or coarse grain slag can be controlled to any desired size by selecting the form at the time of carbon dioxide solidification or the shape quarried after carbon dioxide solidification, thereby easily obtaining a large block preferable as the seaweed bed block.

The seaweed bed block preferably has an optimum density (specific gravity) according to the conditions of the sea bed, the ocean currents, etc. For example, when a large block having a high density is immersed to the sea bottom on which sludge is deposited, the block sinks into the sludge, thereby causing no function as a basement for seaweed beds. However, the block obtained by carbon dioxide solidification of powder and granule or coarse grain slag can be controlled to any desired density by appropriately controlling the bulk density (degree of consolidation) of slag in carbon dioxide solidification.

Although examples of the slag used as the raw material for the artificial stone include blast furnace slag such as air-cooled blast furnace slag, water-granulated blast furnace slag, and the like; steel-making slag such as decarburized slag, dephosphorized slag, desulfurized slag, desiliconized slag, cast slag, and the like, which are produced in the steps of pre-processing, a converter, casting, and the like; ore reducing slag; electric furnace slag; and the like; the slag is not limited to these types of slag. A mixture of at least two types of slag may be used.

The slag produced in the steel manufacturing process generally contains an appreciable amount of CaO (generally, 20% by weight to 60% by weight). The artificial block is obtained by consolidating and agglomerating slag particles (when containing an additive, additive particles and slag particles) using as a binder $CaCO_3$ changed from CaO or $Ca(OH)_2$ (including CaO and $Ca(OH)_2$ added as occasion demands) changed from CaO, which is contained in powder and granule and/or coarse grain slag, by the above carbonation reaction.

Slag mostly contains CaO and some amount of MgO, and the artificial block, which comprises such slag as a raw material, is obtained by consolidating and agglomerating slag particles (additive particles and slag particles when an additive is contained) using as a binder $CaCO_3$ and $MgCO_3$ changed, by the above carbonation reaction, from MgO or $Mg(OH)_2$ (including MgO and $Mg(OH)_2$ added as occasion demands) changed from MgO.

The artificial block is obtained by tightly consolidating slag having small particle diameters using, as a binder, $CaCO_3$ or $CaCO_3$ and $MgCO_3$ produced by carbonation reaction, and thus has sufficient strength, thereby causing neither crack nor fracture even when a shock is applied to the block in transport or immersion in the sea, or allowed to stand the sea for a long time.

The artificial block may contain powder and granule slag and/or coarse grain slag, as well as various additives (powder and granule or coarse grain additives) in order to achieve a preferable composition according to the conditions of a sea area to which the block is applied, etc. Examples of such additives include powder and granule or coarse grain materials (soluble silica and soluble silica-containing materials) serving as soluble silica sources, powder and granule or coarse grain materials (iron oxide, and iron oxide-containing materials) serving as iron oxide sources, powder and granule or coarse grain CaO, and the like. When CaO is contained as an additive in the artificial block, at least portion of CaO contained in slag or significantly added to slag must be left as unreacted CaO after carbon dioxide solidification.

The soluble silica and iron oxide contained in the artificial block effectively act on the growth of marine algae due to elution to seawater. When the sea bottom contains a large amount of phosphorus causing a red tide or sulfur causing a blue tide, CaO contained in a small amount in the block for underwater immersion is effective to prevent the occurrence of a red tide or blue ride due to adsorption of phosphorus or sulfur. Although, as described above, the block containing a large amount of CaO has the problem of increasing the pH of sea water, it is sufficient for adsorption of phosphorus or sulfur that the block contains a small amount of CaO remaining after carbon dioxide solidification.

Examples of powder and granule or coarse grain materials serving as soluble silica sources include powder and granule or coarse grain soluble silica and/or soluble silica-containing materials. As the soluble silica-containing materials, fly ash produced by coal combustion in a thermal power plant or the like, clinker ash, and the like can be used. The fly ash contains about 45 to 75% by weight of soluble silica, and the clinker ash contains about 50 to 65% by weight of soluble silica.

Since water-granulated blast furnace slag also contains a relatively large amount of soluble silica, the slag used is partially or entirely replaced by water-granulated blast furnace slag, for example, a mixture of steel making slag and water-granulated blast furnace slag is used, to obtain the same effect as the case in which an additive serving as a soluble silica source is added.

Powder and granule or coarse grain materials serving as iron oxide sources include powder and granule or coarse grain iron oxide and/or ion oxide-containing materials, and the like. Particularly, as powder and granule or coarse grain materials easily obtained at low cost, iron-containing dust and mill scales produced in the steel manufacturing process can be used. General iron-containing dust is steel making dust which contains about 75% of iron oxide in terms of Fe. The mill scales also contain about 70% of iron oxide in terms of Fe.

When a block having a high specific gravity is immersed to the sea bottom on which sludge is deposited, as described above, the block sinks into the sludge , thereby causing no function as a block for seaweed beds. Therefore, the block used in a sea area in which sludge is deposited preferably comprises, as a main raw material, slag having a relatively low specific gravity. Specifically, it is effective to use water-granulated slag having a lower specific gravity than other slag as at least a portion of the main raw material.

Since the artificial block has relatively porous properties, the above-described effects can be obtained. Although the void ratio of the block is not limited, the void ratio is preferably about 10 to 70%.

The artificial block is produced by the same method as the method of producing a submarine immersion block described above with reference to Figs. 1 to 4.

Example 5

Mortar was poured into a frame of a size of 1.5 m x 1.5 m x 1.5 m, and the concrete block after hardening was divided into two parts by a breaker (rock drill) to obtain blocks for seed material and seaweed bed creating basement, which had a crushed surface for easily adhering marine algae thereto.

One of the blocks was conveyed to a natural seaweed bed in the sea, and immersed in the seaweed bed with the crushed surface facing upward in a state in which it was put in a pulling-up net. As the time the block was immersed, September which was the time immediately before the release of spores from marine algae in the seaweed bed was selected so as to prevent the surface of the block from being covered with sediments in the sea before the adhesion of spores of marine algae or the like. After the elapse of about 1 year, it was recognized that marine algae grew in a stable speed, and rooted on the surface of the block. Therefore, the block was pulled up and recovered from the sea, and immediately conveyed to a place for creating a seaweed bed in order to use as a seed material for creating a seaweed bed.

In consideration of water quality, ocean currents, etc., the sea bottom at a water depth of 4 m sufficiently separate from an exiting seaweed bed was selected as a place for creating a seaweed bed. In this place for creating a seaweed bed, 20 new blocks without no marine algae adhered thereto were immersed in a range having a diameter of about 10 m, with the crushed surfaces facing upward. The seed material was again immersed at the center of the range.

As a result of examination of the seaweed bed creating place after the elapse of about 1 year, it was recognized that marine algae proliferated to all atones around the seed material and sufficiently grew on the surfaces thereof. As a result of measurement of the amounts of the algae grown by crop estimate by unit acreage sampling, it was found that marine algae was grown in a wet weight of 521 g/m$^2$.

Example 6

Converter slag powder having a particle size of 3 mm or less was piled to a height of 1.5 m in a pit of width 4 m x depth 6 m, and appropriately compacted. Then the pit was tightly closed, and carbon dioxide was blown at a feed rate of 50 Nm$^3$/hr for 3 days to solidify the slag with carbon dioxide. The slag solidified with carbon dioxide was crushed by a heavy machine to obtain 15 agglomerated blocks of a size of about 1.0 m to 1.5 m as the seed material and material for creating a seaweed bed.

One of the blocks was conveyed to the natural seaweed bed in the sea as Example 5, and temporarily immersed in the seaweed bed in a state in which it was put in a pulling-up net . As the time the block was immersed, September which was the time immediately before the release of spores from marine algae in the seaweed bed was selected so as to prevent the surface of the block from being covered with sediments in the sea before the adhesion of spores of marine algae or the like. After the elapse of about 1 year, it was recognized that marine algae grew in a stable speed, and rooted on the surface of the block. Therefore, the block was pulled up and recovered from the sea, and immediately conveyed to a place for creating a seaweed bed in order to use as a seed material for creating a seaweed bed.

The same sea area and water depth as Example 1 were selected for a place for creating a seaweed bed. In this place for creating a seaweed bed, 14 new blocks without no marine algae adhered thereto were immersed in a range having a diameter of about 10 m, and the seed material was again immersed at the center of the range.

As a result of examination of the seaweed bed creating place after the elapse of about 1 year, it was recognized that marine algae proliferated to all atones around the seed material and sufficiently grew on the surfaces thereof. As a result of measurement of the amounts of the algae grown by crop estimate by unit acreage sampling, it was found that marine algae was grown in a wet weight of 689 g/m$^2$.

As described above, the method of the present invention permits the selection of a seaweed bed creating place over a wide range, and can securely create a seaweed bed with low labor and at low cost within a relatively short time, and easily create a large scale seaweed bed.

**Claims**

1. An underwater immersion block having a porosity of 10 to 70 %, produced by a method comprising the steps of:

    preparing a granular iron and steel making slag mixture;
    and,
    producing a carbonate by carbonation of the mixture to agglomerate the mixture using the carbonate as a binder.

2. The underwater immersion block according to Claim 1, wherein the mixture comprises the granular slag containing CaO, and the carbonate is CaCO$_3$.

3. The underwater immersion block according to Claim 1, wherein the mixture comprises the granular slag containing CaO and MgO, and the carbonate includes CaCO$_3$ and MgCO$_3$.

4. The underwater immersion block according to Claim 1, wherein the granular slag is a water-granulated blast furnace slag.

5. The underwater immersion block according to Claim 1, wherein the granular slag is the granular slag subjected to a metallic iron removal treatment.

**6.** The underwater immersion block according to Claim 1, wherein the mixture comprises the granular slag and a granular additive.

**7.** The underwater immersion block according to Claim 6, wherein the granular additive comprises a component selected from iron oxide, an iron oxide-containing material, metallic iron, and a metallic iron-containing material.

**8.** The underwater immersion block according to Claim 6, wherein the granular additive comprises a component selected from a soluble silica and a soluble silica-containing material.

**9.** The underwater immersion block according to Claim 6, wherein the granular additive comprises CaO.

**10.** A method of producing an underwater immersion block, comprising the steps of:

preparing a granular iron and steel making slag mixture;
forming a packed bed having a bulk specific gravity/true specific gravity ratio of 0.3 to 0.9 by the mixture; and
treating a carbonation of the mixture in the packed bed to agglomerate the mixture.

**11.** The method of producing the underwater-immersion block according to Claim 10, wherein forming the packed bed comprises forming a pile by the mixture.

**12.** The method of producing the underwater immersion block according to Claim 10, wherein the granular slag is a water-granulated blast furnace slag.

**13.** The method of producing the underwater immersion block according to Claim 10, wherein the granular slag is the granular slag subjected to a metal removal treatment.

**14.** The method of producing the underwater immersion block according to Claim 10, wherein the mixture comprises the granular slag and a granular additive.

**15.** The method of producing the underwater immersion block according to Claim 14, wherein the granular additive comprises a component selected from an iron oxide, an iron oxide-containing material, metallic iron and a metallic iron-containing material.

**16.** The method of producing the underwater immersion block according to Claim 14, wherein the granular additive comprises a component selected from a soluble silica and a soluble silica-containing material.

**17.** The method of producing the underwater immersion block according to Claim 14, wherein the granular additive comprises CaO.

**18.** The method of producing the underwater immersion block according to Claim 10, wherein the step of preparing the mixture comprises the granular iron and steel making slag, and at least one selected from the group-consisting of CaO, $Ca(OH)_2$, MgO and $Mg(OH)_2$.

**19.** The method of producing the underwater immersion block according to Claim 10, wherein the step of preparing the mixture comprises adjusting a moisture of the mixture to the degree of a water content value so that an agglomerate after the carbonation has a maximum compressive strength.

**20.** The method of producing the underwater immersion block according to Claim 10, wherein the step of agglomerating the mixture comprises blowing a gas containing carbon dioxide into the mixture in the packed bed.

**21.** The method of producing the underwater immersion block according to Claim 10, wherein the step of agglomerating the mixture comprises placing the mixture in the packed bed in a gas atmosphere containing carbon dioxide.

**22.** The method of producing the underwater immersion block according to Claim 10, wherein the carbon dioxide is a carbon dioxide saturated with $H_2O$.

**23.** The method of producing the underwater immersion block according to Claim 10, further comprising the step of crashing the agglomerated mixture.

**24.** Use of an underwater immersion block for a submarine immersion or a river immersion, the underwater immersion block being produced by a method comprising the steps of:

preparing a granular iron and steel making slag mixture; and,
producing a carbonate by carbonation of the mixture to agglomerate the mixture using the carbonate as a binder.

**25.** Use according to Claim 24, wherein the mixture comprises the granular slag containing CaO and the carbonate is $CaCO_3$.

**26.** Use according to Claim 24, wherein the mixture comprises the granular slag containing CaO and MgO, and the carbonate includes $CaCO_3$ and

$MgCO_3$.

27. Use according to Claim 24, wherein the granular slag is a water-granulated blast furnace slag.

28. Use according to Claim 24, wherein the granular slag is the granular slag subjected to a metallic iron removal treatment.

29. Use according to Claim 24, wherein the mixture comprises the granular slag and a granular additive.

30. Use according to Claim 29, wherein the granular additive comprises a component selected from iron oxide, an iron oxide-containing material, metallic iron, and a metallic iron containing material.

31. Use according to Claim 29, wherein the granular additive comprises a component selected from soluble silica and a soluble silica-containing material.

32. Use according to Claim 29, wherein the granular additive comprises CaO.

33. Use according to Claim 24, wherein the underwater immersion block has a porosity of 10 to 70 %.

34. A method of creating a seaweed bed using the underwater immersion block according to Claim 1 comprising the steps of:

temporarily placing a heavy-weight material and immersing the heavy-weight material being immersed in an existing seaweed bed so that a marine algae adhere and grow on a surface of the heavy material;
recovering the material and transporting the material as a seed material in a place for creating the seaweed bed; and
arranging a material for adhering the marine algae thereto around the seed material so that the marine algae on the seed material is proliferated to the other material.

35. The method of creating the seaweed bed according to Claim 34, wherein the material comprises a block obtained by consolidating a granular iron and steel making slag by using as the binder, $CaCO_3$, produced by carbonation of the slag.

36. The method of creating the seaweed bed according to Claim 34, wherein the material comprises the block obtained by agglomerating the granular slag produced in the iron and steel making process by using, as the binder, $CaCO_3$, and $MgCO_3$ produced by carbonation of the slag.

37. The method of creating the seaweed bed according to Claim 34, wherein the material comprises the block obtained by agglomerating the granular iron and steel making slag and a granular additive by using, as the binder, $CaCO_3$ produced by carbonation of the slag.

38. The method of creating the seaweed bed according to Claim 34, wherein the material comprises the block obtained by agglomerating the granular iron and steel making slag and the granular additive by using, as the binder, at least one selected from the group consisting of $CaCO_3$ and $MgCO_3$ produced by carbonation of the slag.

39. The method of creating the seaweed bed according to Claim 38, wherein the granular slag is a water-granulated blast furnace slag.

40. The method of creating the seaweed bed according to Claim 38, wherein the granular slag is the granular slag subjected to a metal removal treatment.

41. The method of creating the seaweed bed according to Claim 38, wherein the granular additive comprises a component selected from an iron oxide and an iron oxide-containing material.

42. The method of creating the seaweed bed according to Claim 38, wherein the granular additive comprises a component selected from a soluble silica and a soluble silica-containing material.

43. The method of creating the seaweed bed according to Claim 38, wherein the granular additive comprises at least one selected from the group consisting of CaO, $Ca(OH)_2$, MgO, and $Mg(OH)_2$.

**Patentansprüche**

1. Unterwassertauchblock mit einer Porosität von 10 bis 70 %, erzeugt durch ein Verfahren, umfassend die folgenden Schritte:

Herstellung einer Mischung aus körniger Eisen- und Stahlherstellungsschlacke; und

Erzeugung eines Carbonats durch Carbonisieren der Mischung, um die Mischung zu agglomerieren, unter Verwendung des Carbonats als Bindemittel.

2. Unterwassertauchblock gemäss Anspruch 1, wobei die Mischung körnige Schlacke umfasst, enthaltend CaO, und wobei das Carbonat $CaCO_3$ ist.

3. Unterwassertauchblock gemäss Anspruch 1, wobei die Mischung körnige Schlacke umfasst, die CaO und MgO enthält, und wobei das Carbonat CaCO$_3$ und MgCO$_3$ beinhaltet.

4. Unterwassertauchblock gemäss Anspruch 1, wobei die körnige Schlacke eine wassergranulierte Blashochofenschlacke ist.

5. Unterwassertauchblock gemäss Anspruch 1, wobei die körnige Schlacke körnige Schlacke ist, die einer Entfernungsbehandlung für metallisches Eisen unterzogen wurde.

6. Unterwassertauchblock gemäss Anspruch 1, wobei die Mischung die körnige Schlacke und ein körniges Additiv umfasst.

7. Unterwassertauchblock gemäss Anspruch 6, wobei das körnige Additiv einen Bestandteil umfasst, ausgewählt aus Eisenoxid, einem eisenoxidhaltigen Material, metallischem Eisen und einem metallisches Eisen enthaltenden Material.

8. Unterwassertauchblock gemäss Anspruch 6, wobei das granuläre Additiv einen Bestandteil umfasst, ausgewählt aus löslichem Siliciumdioxid und einem Material, das lösliches Siliciumdioxid enthält.

9. Unterwassertauchblock gemäss Anspruch 6, wobei das granuläre Additiv CaO umfasst.

10. Verfahren zur Erzeugung eines Unterwassertauchblocks, umfassend die folgenden Schritte:

    Herstellung einer Mischung aus körniger Eisen- und Stahlherstellungsschlacke;

    Bildung eines Schüttbetts mit einem Verhältnis von spezifischer Schüttdichte/tatsächlicher spezifischer Dichte von 0,3 bis 0,9 für die Mischung; und

    Behandlung durch Carbonisierung der Mischung in dem Schüttbett, um die Mischung zu agglomerieren.

11. Verfahren zur Erzeugung des Unterwassertauchblocks gemäss Anspruch 10, wobei die Bildung des Schüttbetts die Bildung eines Stapels durch die Mischung umfasst.

12. Verfahren zur Erzeugung des Unterwassertauchblocks gemäss Anspruch 10, wobei die körnige Schlacke eine wassergranulierte Blashochofenschlacke ist.

13. Verfahren zur Erzeugung des Unterwassertauchblocks gemäss Anspruch 10, wobei die körnige Schlacke eine körnige Schlacke ist, die einer Metallentfernungsbehandlung unterzogen wurde.

14. Verfahren zur Erzeugung des Unterwassertauchblocks gemäss Anspruch 10, wobei die Mischung die körnige Schlacke und ein körniges Additiv umfasst.

15. Verfahren zur Erzeugung des Unterwassertauchblocks gemäss Anspruch 14, wobei das körnige Additiv einen Bestandteil umfasst, ausgewählt aus Eisenoxid, einem eisenoxidhaltigen Material, metallischem Eisen und einem metallisches Eisen enthaltenden Material.

16. Verfahren zur Erzeugung des Unterwassertauchblocks gemäss Anspruch 14, wobei das körnige Additiv einen Bestandteil umfasst, ausgewählt aus löslichem Siliciumdioxid und einem Material, das lösliches Siliciumdioxid enthält.

17. Verfahren zur Erzeugung des Unterwassertauchblocks gemäss Anspruch 14, wobei das körnige Additiv CaO umfasst.

18. Verfahren zur Erzeugung des Unterwassertauchblocks gemäss Anspruch 10, wobei der Schritt zur Herstellung der Mischung körnige Eisen- und Stahlherstellungsschlacke umfasst, sowie mindestens einen Bestandteil, ausgewählt aus der Gruppe, bestehend aus CaO, Ca(OH)$_2$, MgO und Mg(OH)$_2$.

19. Verfahren zur Erzeugung des Unterwassertauchblocks gemäss Anspruch 10, wobei der Schritt zur Herstellung der Mischung die Einstellung des Feuchtigkeitsgehalts der Mischung auf einen Grad des Wassergehaltwerts umfasst, so dass ein Agglomerat nach Carbonisierung eine maximale Kompressionsstärke aufweist.

20. Verfahren zur Erzeugung des Unterwassertauchblocks gemäss Anspruch 10, wobei der Schritt des Agglomerierens der Mischung das Einblasen eines Gases, das Kohlendioxid enthält, in die Mischung in dem Schüttbett umfasst.

21. Verfahren zur Erzeugung des Unterwassertauchblocks gemäss Anspruch 10, wobei der Schritt des Agglomerierens der Mischung, das Plazieren der Mischung in dem Schüttbett in einer Gasatmosphäre umfasst, die Kohlendioxid enthält.

22. Verfahren zur Erzeugung des Unterwassertauchblocks gemäss Anspruch 10, wobei das Kohlendioxid ein mit H$_2$O gesättigtes Kohlendioxid ist.

23. Verfahren zur Erzeugung des Unterwassertauchblocks gemäss Anspruch 10, weiterhin umfassend den Schritt des Zerkleinerns der agglomerierten Mischung.

**24.** Verwendung eines Unterwassertauchblocks für ein submarines Eintauchen oder ein Flusseintauchen, wobei der Unterwassertauchblock durch ein Verfahren erzeugt wird, umfassend die folgenden Schritte:

Herstellung einer Mischung aus körniger Eisen- und Stahlherstellungsschlacke und

Erzeugen eines Carbonats durch Carbonisierung der Mischung zu einem Agglomerat der Mischung unter Verwendung des Carbonats als Bindemittel.

**25.** Verwendung gemäss Anspruch 24, wobei die Mischung die körnige Schlacke, enthaltend CaO, umfasst, und wobei das Carbonat $CaCO_3$ ist.

**26.** Verwendung gemäss Anspruch 24, wobei die Mischung die körnige Schlacke, enthaltend CaO und MgO, umfasst und wobei das Carbonat $CaCO_3$ und $MgCO_3$ beinhaltet.

**27.** Verwendung gemäss Anspruch 24, wobei die körnige Schlacke eine wassergranulierte Blashochofenschlacke ist.

**28.** Verwendung gemäss Anspruch 24, wobei die körnige Schlacke eine körnige Schlacke ist, die einer Entfernungsbehandlung für metallisches Eisen unterzogen wurde.

**29.** Verwendung gemäss Anspruch 24, wobei die Mischung die körnige Schlacke und ein körniges Additiv umfasst.

**30.** Verwendung gemäss Anspruch 29, wobei das körnige Additiv einen Bestandteil umfasst, ausgewählt aus Eisenoxid, einem eisenoxidhaltigen Material, metallischem Eisen und einem metallisches Eisen enthaltenden Material.

**31.** Verwendung gemäss Anspruch 29, wobei das körnige Additiv einen Bestandteil umfasst, ausgewählt aus löslichem Siliciumdioxid und einem Material, das lösliches Siliciumdioxid enthält.

**32.** Verwendung gemäss Anspruch 29, wobei das körnige Additiv CaO umfasst.

**33.** Verwendung gemäss Anspruch 24, wobei der Unterwassertauchblock eine Porosität von 10 bis 70 % aufweist.

**34.** Verfahren zur Erzeugung eines Seetangbetts unter Verwendung des Unterwassertauchblocks gemäss Anspruch 1, umfassend die folgenden Schritte:

zeitweises Plazieren eines schwergewichtigen Materials und Eintauchen des schwergewichtigen Materials, das in ein existierendes Seetangbett eingetaucht wurde, so dass marine Algen auf einer Oberfläche des schweren Materials haften und wachsen;

Wiedergewinnung des Materials und Transport des Materials als Saatmaterial an eine Stelle zur Erzeugung des Seetangbetts; und

Anordnen eines Materials zum Anhaften der marinen Algen daran um das Saatmaterial herum, so dass die marinen Algen auf dem Saatmaterial auf das andere Material proliferieren.

**35.** Verfahren zur Erzeugung des Seetangbetts gemäss Anspruch 34, wobei das Material einen Block umfasst, erhältlich durch Konsolidieren einer körnigen Eisenund Stahlherstellungsschlacke durch Verwendung von $CaCO_3$, erzeugt durch Carbonisieren der Schlacke, als Bindemittel.

**36.** Verfahren zur Erzeugung des Seetangbetts gemäss Anspruch 34, wobei das Material einen Block umfasst, erhalten durch Agglomerieren einer granulären Schlacke erzeugt im Eisen- und Stahlherstellungsverfahren, unter Verwendung von $CaCO_3$ und $MgCO_3$, erzeugt durch Carbonisieren der Schlacke, als Bindemittel.

**37.** Verfahren zur Erzeugung des Seetangbetts gemäss Anspruch 34, wobei das Material einen Block umfasst, erhalten durch Agglomerieren von körniger Eisen- und Stahlherstellungsschlacke und einem körnigen Additiv unter Verwendung von $CaCO_3$, hergestellt durch Carbonisieren der Schlacke, als Bindemittel.

**38.** Verfahren zur Erzeugung des Seetangbetts gemäss Anspruch 34, wobei das Material einen Block umfasst, erhalten durch Agglomerieren von körniger Eisen- und Stahlherstellungsschlacke und einem körnigen Additiv unter Verwendung von mindestens einem Bestandteil, ausgewählt aus der Gruppe, bestehend aus $CaCO_3$ und $MgCO_3$, erzeugt durch Carbonisieren der Schlacke, als Bindemittel.

**39.** Verfahren zur Erzeugung des Seetangbetts gemäss Anspruch 38, wobei die körnige Schlacke eine wassergranulierte Blashochofenschlacke ist.

**40.** Verfahren zur Erzeugung des Seetangbetts gemäss Anspruch 38, wobei die körnige Schlacke körnige Schlacke ist, die einer Metallentfernungsbehandlung unterzogen wurde.

**41.** Verfahren zur Erzeugung des Seetangbetts gemäss Anspruch 38, wobei das körnige Additiv einen Bestandteil umfasst, ausgewählt aus Eisenoxid und einem eisenoxidhaltigen Material.

**42.** Verfahren zur Erzeugung des Seetangbetts gemäss Anspruch 38, wobei das körnige Additiv einen Bestandteil umfasst, ausgewählt aus löslichem Siliciumdioxid und einem löslichen siliciumdioxidhaltigen Material.

**43.** Verfahren zur Erzeugung des Seetangbetts gemäss Anspruch 38, wobei das körnige Additiv mindestens einen Bestandteil umfasst, ausgewählt aus der Gruppe, bestehend aus CaO, Ca(OH)$_2$, MgO und Mg(OH)$_2$.

**Revendications**

**1.** Bloc pour immersion sous-marine ayant une porosité de 10 à 70 %, produit par un procédé comprenant les étapes de : préparation d'un mélange de scorie de sidérurgie granulaire ; et, de production d'un carbonate par carbonatation du mélange pour agglomérer le mélange en utilisant le carbonate comme liant.

**2.** Bloc pour immersion sous-marine selon la revendication 1, dans lequel le mélange comprend la scorie granulaire contenant du CaO, et le carbonate est CaCO$_3$.

**3.** Bloc pour immersion sous-marine selon la revendication 1, dans lequel le mélange comprend la scorie granulaire contenant CaO et MgO, et le carbonate inclut CaCO$_3$ et MgCO$_3$.

**4.** Bloc pour immersion sous-marine selon la revendication 1, dans lequel la scorie granulaire est un laitier de haut fourneau granulé à l'état humide.

**5.** Bloc pour immersion sous-marine selon la revendication 1, dans lequel la scorie granulaire est une scorie granulaire soumise à un traitement de déferrisation.

**6.** Bloc pour immersion sous-marine selon la revendication 1, dans lequel le mélange comprend la scorie granulaire et un additif granulaire.

**7.** Bloc pour immersion sous-marine selon la revendication 6, dans lequel l'additif granulaire comprend un composant choisi parmi l'oxyde ferrique, un matériau contenant de l'oxyde ferrique, le fer métallique et un matériau contenant du fer métallique.

**8.** Bloc pour immersion sous-marine selon la revendication 6, dans lequel l'additif granulaire comprend un composant choisi entre la silice soluble et un matériau contenant de la silice soluble.

**9.** Bloc pour immersion sous-marine selon la revendication 6, dans lequel l'additif granulaire comprend du CaO.

**10.** Procédé de production d'un bloc pour immersion sous-marine comprenant les étapes de :

préparation d'un mélange de scorie de sidérurgie granulaire ;

formation d'un lit tassé ayant un rapport masse volumique spécifique apparente/rapport masse volumique spécifique vraie de 0,3 à 0,9 par le mélange ; et

effectuer une carbonatation du mélange dans le lit tassé pour agglomérer le mélange.

**11.** Procédé de production du bloc d'immersion sous-marine selon la revendication 10, dans lequel la formation du lit tassé comprend la formation d'un amoncellement par le mélange.

**12.** Procédé de production du bloc pour immersion sous-marine selon la revendication 10, dans lequel la scorie granulaire est un laitier de haut fourneau granulé à l'état humide.

**13.** Procédé de production du bloc pour immersion sous-marine selon la revendication 10, dans lequel la scorie granulaire est la scorie granulaire soumise à un traitement de démétallisation.

**14.** Procédé de production du bloc pour immersion sous-marine selon la revendication 10, dans lequel le mélange comprend la scorie granulaire et un additif granulaire.

**15.** Procédé de production du bloc pour immersion sous-marine selon la revendication 14, dans lequel l'additif granulaire comprend un composant choisi parmi l'oxyde ferrique, un matériau contenant de l'oxyde ferrique, le fer métallique et un matériau contenant du fer métallique.

**16.** Procédé de production du bloc pour immersion sous-marine selon la revendication 14, dans lequel l'additif granulaire comprend un composé choisi entre une silice soluble et un matériau contenant de la silice soluble.

**17.** Procédé de production du bloc pour immersion sous-marine selon la revendication 14, dans lequel l'additif granulaire comprend du CaO.

18. Procédé de production du bloc pour immersion sous-marine selon la revendication 10, dans lequel l'étape de préparation du mélange comprend la scorie de sidérurgie granulaire et au moins l'un choisi dans le groupe constitué de CaO, Ca(OH)$_2$, MgO et Mg(OH)$_2$.

19. Procédé de production du bloc pour immersion sous-marine selon la revendication 10, dans lequel l'étape de préparation du mélange comprend l'ajustement de l'humidité du mélange au degré de valeur de la teneur en eau de sorte qu'un agglomérat après la carbonatation possède une résistance à la compression maximale.

20. Procédé de production du bloc pour immersion sous-marine selon la revendication 10, dans lequel l'étape d'agglomération du mélange comprend l'insufflation d'un gaz contenant du dioxyde de carbone à l'intérieur du mélange dans le lit tassé.

21. Procédé de production du bloc pour immersion sous-marine selon la revendication 10, dans lequel l'étape d'agglomération du mélange comprend le dépôt du mélange dans le lit tassé sous une atmosphère gazeuse contenant du dioxyde de carbone.

22. Procédé de production du bloc pour immersion sous-marine selon la revendication 10, dans lequel le dioxyde de carbone est un dioxyde de carbone saturé avec H$_2$O.

23. Procédé de production du bloc pour immersion sous-marine selon la revendication 10, comprenant en outre l'étape de broyage du mélange aggloméré.

24. Utilisation d'un bloc pour immersion sous-marine pour une immersion sous-marine ou une immersion en rivière, le bloc pour immersion sous-marine étant produit par un procédé comprenant les étapes de :

préparation d'un mélange de scorie de sidérurgie granulaire ; et

de production d'un carbonate par carbonatation du mélange pour agglomérer le mélange en utilisant le carbonate comme liant.

25. Utilisation selon la revendication 24, dans laquelle le mélange comprend la scorie granulaire contenant du CaO et le carbonate est CaCO$_3$.

26. Utilisation selon la revendication 24, dans laquelle le mélange comprend la scorie granulaire contenant CaO et MgO, et le carbonate inclut CaCO$_3$ et Mg CO$_3$.

27. Utilisation selon la revendication 24, dans laquelle la scorie granulaire est un laitier de haut fourneau granulé à l'état humide.

28. Utilisation selon la revendication 24, dans laquelle la scorie granulaire est la scorie granulaire soumise à un traitement de déferrisation.

29. Utilisation selon la revendication 24, dans laquelle le mélange comprend la scorie granulaire et un additif granulaire.

30. Utilisation selon la revendication 29, dans laquelle l'additif granulaire comprend un composant choisi parmi l'oxyde ferrique, un matériau contenant de l'oxyde ferrique, le fer métallique et un matériau contenant du fer métallique.

31. Utilisation selon la revendication 29, dans laquelle l'additif granulaire comprend un composant choisi entre une silice soluble et un matériau contenant de la silice soluble.

32. Utilisation selon la revendication 29, dans laquelle l'additif granulaire comprend du CaO.

33. Utilisation selon la revendication 24, dans laquelle le bloc pour immersion sous-marine a une porosité de 10 à 70 %.

34. Procédé de création d'un lit pour la reproduction d'organismes aquatiques utilisant le bloc pour immersion sous-marine selon la revendication 1, comprenant les étapes de :

mise en place temporaire d'un matériau à poids élevé et d'immersion du matériau à poids élevé qui est immergé dans un lit pour la reproduction d'organismes aquatiques existant, de sorte qu'une algue marine adhère à, et croisse sur, une surface du matériau lourd ;

récupération du matériau et de son transport, sous la forme d'un matériau de semences en un lieu pour la création du lit pour la reproduction d'organismes aquatiques; et

l'agencement d'un matériau pour qu'y adhèrent les algues marines autour du matériau de semences de sorte que les algues marines adhèrent aux surfaces de pourtour du matériau de semences prolifèrent jusqu'à l'autre matériau.

35. Procédé de création du lit de semences selon la revendication 34, dans lequel le matériau comprend un bloc obtenu par consolidation d'un mélange de scorie de sidérurgie en utilisant comme liant le CaCO$_3$ produit par carbonatation de la scorie.

**36.** Procédé de création du lit à semences selon la revendication 34, dans lequel le matériau comprend le bloc obtenu par agglomération de la scorie granulaire produite en sidérurgie en utilisant comme liant le $CaCO_3$ et le $MgCO_3$ produits par carbonatation de la scorie.

**37.** Procédé de création du lit à semences selon la revendication 34, dans lequel le matériau comprend le bloc obtenu par agglomération du mélange de scorie et d'un additif granulaire en utilisant, comme liant, le $CaCO_3$ produit par carbonatation de la scorie.

**38.** Procédé de création du lit de semences selon la revendication 34, dans lequel le matériau comprend le bloc obtenu par agglomération de la scorie de sidérurgie et de l'additif granulaire en utilisant, comme liant, au moins l'un choisi dans le groupe constitué de $CaCO_3$ et de $MgCO_3$ produits par carbonatation de la scorie.

**39.** Procédé de création du lit à semences selon la revendication 38, dans lequel la scorie granulaire est un laitier de haut fourneau granulé à l'état humide.

**40.** Procédé de création du lit à semences selon la revendication 38, dans lequel la scorie granulaire est la scorie granulaire soumise à un traitement de démétallisation.

**41.** Procédé de création du lit à semences selon la revendication 38, dans lequel l'additif granulaire comprend un composant choisi entre l'oxyde de fer et un matériau contenant de l'oxyde de fer.

**42.** Procédé de création du lit pour la reproduction d'organismes aquatiques selon la revendication 38, dans lequel l'additif granulaire comprend un composant choisi entre la silice soluble et un matériau contenant de la silice soluble.

**43.** Procédé de création du lit à semences selon la revendication 38, dans lequel l'additif granulaire comprend au moins l'un choisi dans le groupe constitué de CaO, $Ca(OH)_2$, MgO et $Mg(OH)_2$.

Fig. 1

Additives
CaO etc.
Water content adjustment

$CO_2$ or
$CO_2$ Containing Gas

Slag → | Metal recovery treatment | → | Mixing | → | Packing | → | Carbonate Solidification | → | Cutt-out | → Submarine immersion block

Fig. 2

Packing
Carbonate solidification

Metal recovery treatment

Slag

Slag

A

Cut-off of
Submarine
immersion block

1          2          3

Additives etc.
Water content adjustment

Fig. 3

Additives
CaO etc.
Water content adjustment

$CO_2$ or
$CO_2$ Containing Gas

Slag → | Metal removal treatment | → | Mixing | → | Packing | → | Carbonate Solidification | → | Cutt-out | → Submarine immersion block

Fig. 4

Metal removal treatment

Packing
Carbonate solidification

Slag

Slag

A

1    2    3

Cut-off of
Submarine
immersion block

Additives etc.
Water content adjustment

Fig. 5

( a )

40

4a        4a        40

( b )

4b        4b        4b

( c )

4c.        4c

Fig. 6

Slag → Metal removal treatment → Mixing ← (Additives CaO etc.) → Packing → Carbonate Solidification ← ($CO_2$ or $CO_2$ Containing Gas) → Cutt-out → River immersion block

EP 1 018 298 B1

Fig. 7

Metal removal treatment

Packing
Carbonate solidification

Slag

Slag

A

1    2

3

Additives.
etc.

Cutt-off of
River
immersion block